# EUROPÄISCHE PATENTSCHRIFT

(11) **EP 3 147 729 B1**
(45) Veröffentlichungstag und Bekanntmachung des Hinweises auf die Patenterteilung: **12.06.2019**
(21) Anmeldenummer: 16190680.5
(22) Anmeldetag: 26.09.2016
(51) Int. Cl.: G05B 13/04, B01J 19/00, G05D 21/02

(54) **VERFAHREN UND VORRICHTUNG ZUR ADAPTIVEN UND OPTIMIERENDEN PROZESSSTEUERUNG, VERWENDUNG DES VERFAHRENS**
METHOD AND DEVICE FOR ADAPTIVE AND OPTIMISING PROCESS MANAGEMENT, USE OF THE METHOD
PROCEDE ET DISPOSITIF DE COMMANDE DE PROCESSUS ADAPTATIF ET OPTIMAL, UTILISATION DU PROCEDE

(30) Priorität: 25.09.2015 DE 102015116306; 09.12.2015 DE 102015121411
(43) Veröffentlichungstag der Anmeldung: 29.03.2017
(73) Patentinhaber: Göcke, Tobias, 01307 Dresden (DE)
(72) Erfinder: GÖCKE, Tobias, 01307 Dresden (DE)
(74) Vertreter: Lippert Stachow Patentanwälte Rechtsanwälte Partnerschaft mbB

(56) Entgegenhaltungen:
- GB-A- 2 363 477
- US-A1- 2009 198 350
- US-A1- 2015 168 925

## Beschreibung

Die Erfindung betrifft ein Verfahren sowie eine Vorrichtung zur adaptiven und optimierenden Steuerung einer Prozesseinheit eines Prozesses sowie die Verwendung des erfindungsgemäßen Verfahrens.

Die Mehrzahl industrieller Prozesse, beispielsweise in der chemischen Industrie, kann durch die Anwendung von Modellen und darauf basierende Optimierungen effektiver gestaltet werden.

Gerade die Chemieindustrie hat in dieser Hinsicht noch großen Nachholbedarf, wobei Prozesse durch den gezielten Einsatz neuer Technologien zur Simulation und Modellierung deutlich ressourcenschonender gestaltet werden können, was mit einem großen finanziellen Nutzen einhergehen kann.

Beispielsweise können die durch Fehlproduktionen, z. B. aufgrund schwankender Eduktqualitäten, Verunreinigungen oder äußerer Einflüsse in Verbindung mit einer fehlenden Anpassung der Prozessparameter an die geänderten Bedingungen, verursachten Kosten in der Pharmaindustrie bis zu 25 % der Gesamtkosten der Pharmaindustrie betragen.

Mit den bisher zur Verfügung stehenden Methoden können Simulations- und Modellierungsergebnisse nicht in Echtzeit unter Berücksichtigung von kurzzeitigen Änderungen und Schwankungen im Produktionsprozess berücksichtigt werden, da zumeist keine direkten prozesssteuerungsrelevanten Aussagen generiert und dargestellt werden. Es erfolgt eine vom wahren Produktionsprozess entkoppelte Auswertung der Messdaten und in einem weiteren Schritt die Beantragung oder Diskussion möglicher Prozessoptimierungen und Stellgrößenanpassungen.

Eine Steuerempfehlung, bestimmt mit Hilfe einer dynamischen Modellsimulation und Optimierung in Echtzeit, ist hingegen nicht möglich. Dies führt häufig dazu, dass entweder keine Prozessparameteranpassung vorgenommen wird oder eine Anpassung erfolgt, welche auf den Erfahrungen des jeweiligen Bedieners basiert. Diese Prozessparameteranpassung ist somit sehr stark von dem Bediener abhängig.

Zudem stellt die auf Erfahrungen basierende Prozesssteuerung eine subjektive, nicht rational nachvollziehbare Prozesssteuer-Entscheidung dar, die außerdem nicht reproduzierbar ist.

Bisher angewandte Verfahren zur Lösung dieses Problems sind zum einen von einer losgelösten Betrachtung möglicher Optimierungsschritte und dem eigentlichen Produktionsprozess geprägt. Auf zeitlich oder örtlich, insbesondere nur kurzzeitig, auftretende Schwankungen, beispielsweise der Eduktqualität oder der äußeren Bedingungen kann daher nicht eingegangen werden.

Zum anderen werden existierende Echtzeitanwendungen lediglich für eine Gesamtbetrachtung des Prozesses verwendet, wobei die Optimierung des gesamten Prozesses anhand einer Betrachtung des gesamten Prozesses als Bilanz des stationären Zustands vorgenommen wird.

Aus der US 2015/0168925 A1 ist ein Verfahren bekannt, bei dem eine Model-predictive-control-Methode stochastisch angepasst wird, um eine auf den gesamten Prozess bezogene Kostenfunktion zu optimieren. Hierfür werden Messdaten unterschiedlichster Quellen zusammenführend gespeichert und weiterverarbeitet.

Neben der Modellanpassung und der Optimierung wird ein Model-Prediction-Controller als Echtzeit-Onlineanwendung implementiert, die abhängig von der Modellgüte einen optimierten Prozessverlauf wiedergibt. Hierbei werden jedoch keine dynamischen Simulationen eingesetzt, was zu einer ungenauen und demnach nicht vollständig optimierenden Funktionalität der Prozesssteuerung führt.

Neben dem Model-Prediction-Controller werden Echtzeit-Optimierungs-Controller (Realtime-Optimization-Controller, RTO-Controller) eingesetzt. Diese RTO-Controller haben das Ziel einer langfristigen Profitabilität bezogen auf der gesamten Anlage, wobei die Echtzeitoptimierungsverfahren auf Systeme im stationären Zustand auf den vollständigen Stellgrößenraum angewandt werden.

Dabei wird das Modell mit Hilfe von Messwerten oder Angaben, wie z. B. Preisen, adaptiert. Anschließend werden kostenoptimierte Stellgrößen errechnet und ausgegeben. Die verwendeten Messwerte werden im Online-Messverfahren generiert und direkt verarbeitet.

Aufgrund der Verwendung von linearen/teildynamischen Modellen und der Optimierung über den gesamten Prozess ohne Einsatz von stochastisch-dynamischen Simulationen zur Bestimmung der optimalen Stellgrößen können einzelne kurzzeitige Faktoren in der Prozesssteuerung keine Berücksichtigung finden. Zudem führt die fehlende Daten- und Simulationskontextualisierung zu Modellungenauigkeiten.

Aufgabe der vorliegenden Erfindung ist es daher, Steuerentscheidungen mit Hilfe von Datenauswertungen in Echtzeit zu ermöglichen, die im Vergleich zum Stand der Technik eine bessere Optimierung der Prozessparameter ermöglichen. Zudem soll eine Möglichkeit geschaffen werden, unterschiedliche Datenquellen zu kombinieren, um eine möglichst genaue Simulation des tatsächlich ablaufenden Prozesses realisieren zu können.

Zur Lösung der Aufgabenstellung wird ein Verfahren mit den Merkmalen des Anspruchs 1 angegeben. Anspruch 10 betrifft die Verwendung des Verfahrens, Anspruch 11 eine erfindungsgemäße Vorrichtung zur Durchführung des Verfahrens.

Ein Aspekt verschiedener Ausführungsformen beruht auf der Erkenntnis, dass die Echtzeitoptimierung von Stellgrößen (Prozessparametern) verbessert werden kann, indem der Gesamtprozess in einzelne Teilprozesse unterteilt wird, die jeweils optimiert werden. Zudem kann eine rückwärts gerichtete Optimierung für die Bestimmung der Produktspezifikation des vorangehenden Teilprozesses vorgesehen sein oder werden. Zur Verbesserung der Genauigkeit kann eine dynamische Simulation vorgesehen sein, bei der auch zuvor archivierte Daten, z. B. kontextualisierte Messwertdaten, z. B. erhältlich durch online PCA, einbezogen werden können.

Das erfindungsgemäße Verfahren kann zur Echtzeitoptimierung von Produktionsprozessen, die durch Messwerte und mathematische Modelle beschrieben werden können, genutzt werden. Günstigstenfalls sollten die Eigenschaften des Produkts des Produktionsprozesses mit den gewünschten Soll-Eigenschaften übereinstimmen oder zumindest in einem vordefinierten Bereich liegen. Unter einem optimalen Produktionsprozess wird ein ressourcenschonendes, prozesssicheres und unter Einsatz aktueller Technologien eingesetztes Verfahren verstanden.

Als Echtzeitanwendung wird vorliegend gemäß DIN ISO 2382:2015-05 eine Applikation bezeichnet, die innerhalb eines definierten Zeitraums (Latenz) auf ein Ereignis reagiert. Aufgrund der hohen Anforderungen an eine Echtzeitanwendung für eine Prozesssteuerung kann eine Latenz vorliegend beispielsweise max. 3000 ms betragen. In diesem Fall sollte die Simulationsdauer 2000 ms nicht überschreiten, da für den Datentransfer beispielsweise eine Dauer von 1000 ms angenommen werden kann.

Unter einem Prozess ist vorliegend der gerichtete Ablauf eines technischen Geschehens zu verstehen, beispielsweise ein Produktionsprozess eines Gegenstandes oder einer chemischen Substanz, bei dem Ausgangsmaterialien oder Ausgangsstoffe (Edukte) in ein oder mehrere Produkte überführt oder umgewandelt werden.

Es kann sich dabei auch um einen reaktiven Prozess handeln, d. h. einen Prozess, bei dem verschiedene Prozessmaterialien als Edukte zu einem oder mehreren Produkten miteinander reagieren. Hierunter werden insbesondere chemische Reaktionen verstanden.

Ein Prozess kann in ein oder mehrere Teilprozesse unterteilt werden. Dabei kann es sich um zeitlich und/oder räumlich voneinander getrennte Phasen eines Prozesses handeln. Beispielsweise kann ein Produktionsprozess einer chemischen Substanz mehrere Reaktionsstufen als Teilprozesse umfassen, bei denen jeweils ein oder mehrere Zwischenprodukte hergestellt werden, die ihrerseits in dem nachfolgenden Teilprozess weiterverarbeitet werden.

Gemäß dem erfindungsgemäßen Verfahren zur adaptiven und optimierenden Steuerung eines Prozesses, der ein oder mehrere Teilprozesse umfasst, erfolgt zu jedem Teilprozess eine Teilprozesssimulation, die jeweils eine erste und eine zweite Teilprozesssimulation aufweist. Die erste Teilprozesssimulation kann dabei den Teilprozess ausgehend von den Edukten in Richtung Produkte beschreiben (Hinsimulation, Hinoptimierung), während die zweite Teilprozesssimulation den Teilprozess von den Produkten in Richtung der Edukte beschreiben kann (Rücksimulation, Rückoptimierung).

Erfindungsgemäß umfasst die erste Teilprozesssimulation das Vorgeben einer Soll-Produktspezifikation, d. h. einer gewünschten Ziel-Produktspezifikation, sowie eines Toleranzbereiches der Soll-Produktspezifikation.

Toleranzbereich bedeutet, dass eine Produktspezifikation mit einer Abweichung von der Soll-Produktspezifikation, die in diesem Bereich liegt, als akzeptabel angesehen werden kann.

Die Produktspezifikation charakterisiert die Produkte am Ende des Teilprozesses und kann auch als Produktvektor aufgefasst und bezeichnet werden kann. Darunter ist die Gesamtheit aller Eigenschaften (Parameter der Produktspezifikation) zu verstehen, die das oder die Produkte direkt oder indirekt charakterisieren, wie beispielsweise Materialeigenschaften (z. B. Schmelzpunkt, Siedepunkt, Kristallinität, chemische Zusammensetzung, Dichte, geometrische Form, Viskosität etc.) sowie äußere Bedingungen (z. B. Temperatur des Produkts, Druck des Produkts).

Die erste Teilprozesssimulation umfasst weiterhin das Ermitteln von Werten aus dem jeweiligen Teilprozess, welche den chemisch-physikalischen Zustand von Edukten des Teilprozesses beschreiben. Beispielsweise können direkte Messwerte als Werte genutzt werden, z. B. die Temperatur oder Dichte der Edukte. Die Werte können aber auch indirekt ermittelt werden, indem z. B. zunächst Spektren der Edukte, wie z. B. (Nah)Infrarot-Spektren, Raman-Spektren, Fluoreszenz-Spektren oder Massenspektren, aufgezeichnet und daraus Werte extrahiert oder durch Weiterverarbeitung gewonnen werden.

Neben spektroskopischen Messmethoden können weitere chemische oder physikalische Effekte zur Ermittlung des Eduktzustands genutzt werden, u. a. Focused Beam Reflectance Measurement, der pH-Wert, die Viskosität und die Leitfähigkeit.

Vorrichtungsseitig können die Werte S mittels Sensoren, z. B. multivariater Sensoren, die in einem Messgerät integriert sein können, ermittelt werden. Werden beispielsweise in einem Spektrometer integrierte Sensoren verwendet, kann die Erstellung einer Kalibrierung notwendig sein. Diese Kalibrierungen können als mathematische Verarbeitungen von Spektren verstanden werden. Am Ende der Kalibrierung kann ein messgeräteabhängiges Kalibrierungsmodell erhalten werden, welches aus einem aufzunehmenden Spektrum die gewünschte Information errechnen kann. Zudem können Rohdaten zur Verbesserung der Messgerätekalibrierungen herangezogen werden.

Diese Modell kann u. a. mit Hilfe der "Indirect Hard Modelling"-Methode (IHM-Methode) erstellt werden. Diese Methode verwendet mathematische Abbilder von Reinstoffspektren, um ein Gemischstoff-Spektrum zu beschreiben. Dabei kann diese Methode eine hohe Genauigkeit erreichen und ist auch mit wenigen Überprüfungsmessungen reproduzierbar. Voraussetzung für die Erstellung einer IHM-Kalibrierung sind demnach die Reinstoffspektren und die dazu gehörenden mathematischen Abbilder. Die Kalibrierung kann mit der Voigt-Funktion erfolgen.

Durch die Einführung eines Korrekturterms zur Berücksichtigung von Peak-Verschiebungen bzw. Banden-Verschiebungen in den Spektren von Stoffgemischen wird ein Minimierungsproblem gelöst. Hierzu kann das gemessene, nicht-lineare spektrale Modell des Gemisches direkt mit der nicht-linearen kleinsten Fehlerquadrat-Methode verrechnet werden. Es ergeben sich die Gewichtungen der angegebenen Reinstoffspektren, womit letztendlich die Zusammensetzung des Stoffgemischs definiert werden kann.

Die mathematischen Abbilder und die Reinstoffspektren können über die Ontologie, welche nachfolgend beschrieben wird, bereitgestellt und kontextualisiert werden. Die MessgeräteKalibrierung kann z. B. basierend auf den Daten aus der Ontologie erfolgen.

Bei fehlender Datengrundlage kann die Kalibrierung der Messgeräte während der Anlaufphase des Produktionsprozesses direkt in der Prozessanlage durchgeführt. In dieser Zeit können kontextualisierte, anlagen- und messgerätspezifische Daten erfasst und in der Ontologie registriert werden. Mit Hilfe dieser Daten und über die Reinstoffspektren kann, wie schon beschrieben, das Kalibrierungsmodell der spektroskopischen Messmethode erstellt und verbessert werden. Optional kann die Erstellung eines ersten Kalibrierungsmodells auch im Labor durchgeführt werden, welches dann in der Prozessanlage verbessert und validiert wird.

Die direkte Einbindung und Zusammenführung von unterschiedlichen Daten führt zu einer Testumgebung für Kalibrierungsmodelle des jeweiligen Messgeräts und kann somit die Entwicklungszeit und die Kosten für dessen Erstellung senken. Zudem kann eine anlagen- und mediumspezifische Testumgebung generiert werden. Zusätzlich können die verbesserten Modelle in der Kalibrierung einer verbesserten Prozessführung dienen. Ebenso kann die direkte Kalibrierung im Prozess (Voraussetzung ist das Vorhandensein von Reinstoffspektren) den aufwendigen Kalibrierungsprozess beschleunigen und ist unabhängig von labortechnischen Untersuchungen.

Funktionelle Zusammenhänge der stoffspezifischen Kalibrierung können u.a. über die "Partial least-squares regression" oder die "Lineare least-squares regression", durch Zuhilfenahme einer Hauptkomponentenanalyse (Principal Component Analysis, PCA) oder weiteren multivariaten Methoden bestimmt werden.

Vorrichtungsseitig kann optional ein Client Computer vorgesehen sein, der für die Kommunikation mit dem Framework vorgesehen sein kann, wobei Kalibrierungen hinterlegt werden können.

Mittels der ermittelten Werte wird erfindungsgemäß eine erste Eduktspezifikation erstellt, welche auch als Eduktvektor aufgefasst und bezeichnet werden kann. Darunter ist die Gesamtheit aller Eigenschaften in Form von Parametern (Parameter der Eduktspezifikation) zu verstehen, die das oder die Edukte direkt oder indirekt charakterisieren, wie beispielsweise Materialeigenschaften (z. B. Schmelzpunkt, Siedepunkt, Kristallinität, chemische Zusammensetzung, Dichte, geometrische Form, Viskosität etc.) sowie äußere Bedingungen (z. B. Temperatur, Druck) und feststehende prozessspezifische Bedingungen, wie Reaktorvolumen, Reaktordesign etc. Einige der Eigenschaften, z. B. die prozessspezifischen Bedingungen, können auch in einer Datenbank hinterlegt sein und aus dieser abgerufen werden.

Des Weiteren erfolgt eine gewichtete stochastische Auswahl von Stellgrößen des Teilprozesses, beispielsweise mittels Gewichtungswerten aus einer onlinePCA. Unter Stellgrößen sind diejenigen Prozessparameter des Teilprozesses zu verstehen, die unter Berücksichtigung der physikalischen und anlagenspezifischen Grenzen variiert werden können. Mögliche Stellgrößen können beispielsweise sein: Temperatur, Rührgeschwindigkeit, Art und Weise eines Energieeintrags, z. B. einer Laserbehandlung, Volumenstrom. Je mehr Stellgrößen berücksichtigt werden, desto komplexer ist das benötigte Modell zur Simulation des Teilprozesses.

Gewichtete Auswahl bedeutet, dass die Stellgrößen hinsichtlich ihrer Relevanz, z. B. hinsichtlich ihres Einflussvermögens auf den Teilprozess, der Frage, wie einfach oder schwierig die jeweilige Stellgröße verändert werden kann etc., für den Teilprozess beurteilt und mit Wichtungsfaktoren versehen werden.

Die Beurteilung kann beispielsweise mittels PCA im Online Setting unter Berücksichtigung von archivierten Daten erfolgen.

Beispielsweise können aus einer onlinePCA die wichtigsten Edukteigenschaft-Stellgrößen Paarungen in Form des PCA-Ergebnisses erhalten werden. Die so ermittelten Werte können zur Gewichtung dienen. Beispielsweise kann jeder Parameter (beispielsweise für die Hinsimulation die zur Verfügung stehenden Stellgrößen; für die Rücksimulation, wie nachstehend erläutert, die verschiedenen zweiten Eduktspezifikationen), der kleiner ist als ein Schwellenwert, in der stochastischen Auswahl weniger berücksichtigt werden. Diese Parameter können einen mehrdimensionalen Raum aufspannen, der durch Schrittweite und Wertebereich definiert werden kann.

Jede optimierende Simulation kann ein Kontingent, d. h. eine maximale Anzahl an Simulationen pro Teilprozesssimulation haben, das beispielsweise durch die zur Verfügung stehende Hardware technisch begrenzt sein kann. Die Gewichtung kann die Schrittweite des priorisierten Parameters verringern, so dass eine genauere Optimierung bei gleichbleibender maximaler Anzahl der Einzelsimulationen möglich ist.

Die Stellgrößen werden im Prozessmodell entsprechend ihres Wichtungsfaktors berücksichtigt. Beispielsweise kann die Temperatur als eine mögliche Stellgröße einen höheren Wichtungsfaktor erhalten, d. h. von größerer Bedeutung sein als beispielsweise der Druck als weitere Stellgröße, da unter bestimmten Bedingungen die Temperatur einen größeren Einfluss auf den Umwandlungsdruck haben kann als der Druck.

Die Wichtungsfaktoren können beispielsweise in vorherigen Versuchen, beispielsweise beim Einfahren der Anlage, ermittelt werden und in einer Datenbank hinterlegt werden. Aus der Datenbank können die Wichtungsfaktoren mittels der unten beschriebenen Ontologie für die Einbeziehung in das Prozessmodell abgegriffen werden. Die bedeutendsten Werte können beispielsweise mittels onlinePCA erhalten werden.

Stochastische Auswahl bedeutet, dass die für die Simulation des Teilprozesses notwendigen konkreten Zahlenwerte der Stellgrößen mittels eines stochastischen Prozesses (Zufallsprozesses), beispielsweise einer Monte-Carlo-Simulation, ausgewählt und ggf. variiert werden. Wie zuvor beschrieben, kann die Wichtung die stochastische Auswahl beeinflussen.

Das erfindungsgemäße Verfahren umfasst weiterhin das Simulieren des Teilprozesses mittels eines Simulationsmodells, mit der ersten Eduktspezifikation und den stochastisch ausgewählten Stellgrößen des Teilprozesses. Optional können auch mehrere Simulationen parallel zueinander unter Verwendung unterschiedlicher stochastisch ausgewählter Stellgrößen durchgeführt werden.

Das Simulationsmodell bildet den Zusammenhang zwischen der Eduktspezifikation, den Stellgrößen und der Produktspezifikation ab. Es kann beispielsweise aus analogen Prozessen bekannt sein oder seinerseits berechnet werden. Für eine möglichst genaue Simulation kann es erforderlich sein, das Simulationsmodell vor Beginn des zu steuernden Prozesses direkt in der Prozessanlage zu ermitteln oder zu optimieren.

Dazu kann beispielsweise vorgesehen sein, eine Methodenentwicklung während des Einfahrens der Anlage, ggf. nachgeschaltet zur oben beschriebenen Messgerätekalibrierung, durchzuführen. Diese Vorgehensweise kann die Einstellung von Betriebspunkten ermöglichen, die im normalen Betrieb nicht auftreten sollten. Es können somit Modelle mit einer Gültigkeit in einem größeren Bereich ergeben, die robuster eingesetzt werden können. Die Methodenentwicklung kann beispielsweise auf Werkzeugen der Chemometrie, z. B. der Hauptkomponentenanalyse oder einer multivariaten Datenanalyse, basieren.

Nachfolgend kann eine Evaluation des Simulationsmodells durchgeführt werden, in deren Ergebnis die den Prozess beschreibenden mathematischen Grundlagen optimiert werden können, bis die Ergebnisse der Simulation mit den tatsächlichen Messwerten weitgehend übereinstimmen.

Das Ergebnis der Simulation, d. h. die mit den vorgegebenen stochastisch ausgewählten Stellgrößen und der Eduktspezifikation erreichbare Produktspezifikation (simulierte Produktspezifikation) wird mit dem Toleranzbereich der Soll-Produktspezifkation des Teilprozesses verglichen, d. h. es wird geprüft, ob die simulierte Produktspezifikation im Toleranzbereich der Soll-Produktspezifikation liegt.

Wird die Soll-Produktspezifikation innerhalb eines zuvor vorgegebenen Toleranzbereichs nicht erreicht, werden weitere Simulationen mit weiteren stochastisch ausgewählten Stellgrößen durchgeführt, bis die simulierte Produktspezifikation innerhalb des Toleranzbereichs der Soll-Produktspezifikation liegt (Optimierung der Soll-Stellgrößen). Die weiteren Simulationen können dabei entweder parallel oder seriell, d. h. nacheinander, durchgeführt werden.

Wird mit einer Simulation die Soll-Produktspezifikation innerhalb des vorgegebenen Toleranzbereichs erreicht, werden die dazugehörigen Stellgrößen als Soll-Stellgrößen für die Durchführung des Teilprozesses ausgegeben.

Erfindungsgemäß umfasst die zweite Teilprozesssimulation das Vorgeben der Soll-Produktspezifikation und der Soll-Stellgrößen, die aus der ersten Teilprozesssimulation bekannt sind, sowie das Definieren eines ersten Optimierungsparameters und einer ersten Abbruchbedingung.

Unter einem Optimierungsparameter ist eine Gruppe bestehend aus einer oder mehreren Variablen zu verstehen, wobei die Variablen zu optimierende Parameter der Prozessspezifikation beschreiben, d. h. Prozessbedingungen oder Prozesseigenschaften, die variiert werden können, um den Prozess, z. B. in Hinblick auf einen möglichst geringen Energieverbrauch, einen möglichst langen Wartungszyklus, eine möglichst hohe Materialausbeute, möglichst geringe Anzahl an Anlagenbedienern oder eine vorteilhafte Geschwindigkeit des Prozesses, anzupassen, indem eine entsprechend geeignete Eduktspezifikation ausgewählt wird. In jedem Fall bleiben die Stellgrößen des Prozesses unverändert.

Der Optimierungsparameter kann beispielsweise auch als Teil der Produktspezifikation aufgefasst und behandelt werden.

Definieren des Optimierungsparameters bedeutet, dass die zu berücksichtigenden Variablen vorgeben werden, nicht jedoch konkrete Zahlenwerte.

Die Abbruchbedingung gibt einen Wert für den Optimierungsparameter vor, bei dem eine ausreichende Optimierung des Prozesses erreicht wird, beispielsweise technische Parameter wie Materialeinsatz, Kühlmittelverbrauch etc. minimiert werden, die Kosten einen bestimmten Grenzwert nicht übersteigen, ein bestimmtes Wartungsintervall zu erwarten ist, ein bestimmter Durchsatz zu erwarten ist etc.

Zur Durchführung der zweiten Teilprozesssimulation wird eine zweite Eduktspezifikation vorgegeben, die beispielsweise auch der ersten Eduktspezifikation entsprechen kann.

Ausgehend von dieser zweiten Eduktspezifikation, den Soll-Stellgrößen, welche mittels der ersten Teilprozesssimulation ermittelt wurden, sowie der Soll-Produktspezifikation wird mittels eines erweiterten Simulationsmodells der zugehörige Optimierungsparameter bestimmt.

Das erweiterte Simulationsmodell kann sich vom Simulationsmodell der ersten Teilprozesssimulation darin unterscheiden, dass weiterhin zumindest auch der Zusammenhang zwischen der Eduktspezifikation und dem Optimierungsparameter abgebildet wird. Für den Fall, dass auch die erste Teilprozesssimulation eine Optimierung umfasst, können das Simulationsmodell und das erweiterte Simulationsmodell einander entsprechen.

Der erhaltene Optimierungsparameter wird anschließend dahingehend überprüft, ob die Abbruchbedingung vorliegt (erfüllt wird), beispielsweise, ob ein vorgegebener Grenzwert für den Optimierungsparameter nicht überschritten wird.

Falls die Abbruchbedingung nicht vorliegt, d. h. der Optimierungsparameter z. B. einen vorgegebenen Grenzwert nicht einhält, wird eine weitere zweite Eduktspezifikation vorgegeben und mit dieser der Teilprozess simuliert. Die Soll-Stellgrößen sowie die Soll-Produktspezifikation bleiben dabei unverändert.

Das erneute Vorgeben einer zweiten Eduktspezifikation und das Simulieren des Teilprozesses werden solange wiederholt, bis die Abbruchbedingung vorliegt. Optional können mehrere Simulationen parallel zueinander durchgeführt werden, beispielsweise, um schneller zu einem optimierten Ergebnis zu gelangen. Im Falle mehrerer parallel durchgeführter Simulationen sind obige Ausführungen so zu verstehen, dass die Vorgabe einer weiteren zweiten Eduktspezifikation etc. durchgeführt werden, wenn kein erster Optimierungsparameter der durchgeführten Simulationen die erste Abbruchbedingung erfüllt.

Ist dies der Fall, so wird die zugehörige zweite Eduktspezifikation, d. h. diejenige Eduktspezifikation mit der ein bestimmter Optimierungsparameter erreicht werden kann, ausgegeben.

Diese optimierte Eduktspezifikation kann beispielsweise an einen Hersteller der Edukte weitergegeben werden, um von diesem entsprechende Edukte anfordern zu können oder die optimierte Eduktspezifikation wird, wie nachfolgend erläutert, als Soll-Produktspezifikation eines vorhergehenden Prozesses verwendet.

Gemäß verschiedenen Ausführungsvarianten kann vorgesehen sein, dass der Prozess i Teilprozesse mit i = 1...n und n > 1, d. h. mindestens zwei Teilprozesse, beispielsweise die Teilprozesse i und (i-1), umfasst.

In diesem Fall kann vorgesehen sein, dass für alle Teilprozesse mit i < n die Soll-Produktspezifikation für die erste und/oder zweite Teilprozesssimulation vorgegeben wird, indem für jeden i-ten Teilprozess mit i > 1 die optimierte zweite Eduktspezifikation gemäß der oben beschriebenen zweiten Teilprozesssimulation ermittelt und als Soll-Produktspezifikation an den (i-1)-ten Teilprozess übermittelt wird. Der (i-1)-te Teilprozess kann dabei zeitlich und/oder räumlich vor dem i-ten Teilprozess ablaufen.

Beispielsweise kann im Falle von zwei Teilprozessen, wobei der zweite Teilprozess zeitlich und/oder räumlich nach dem ersten Teilprozess ablaufen kann, die Soll-Produktspezifikation des ersten Teilprozesses für die erste und/oder zweite Teilprozesssimulation des ersten Teilprozesses vorgegeben werden, indem die optimierte zweite Eduktspezifikation des zweiten Teilprozesses wie oben beschrieben mittels einer zweiten Teilprozesssimulation des zweiten Teilprozesses ermittelt wird dann als Soll-Produktspezifikation an den ersten Teilprozess übermittelt wird.

Entsprechend kann die Soll-Produktspezifikation eines jeden Teilprozesses mit Ausnahme des letzten Teilprozesses jeweils der optimierten zweiten Eduktspezifikation des nachfolgenden Teilprozesses entsprechen.

Gemäß verschiedenen Ausführungsvarianten kann vorgesehen sein, dass die zweite Eduktspezifikation Parameter umfasst, die gewichtet stochastisch ausgewählt werden. Beispielsweise kann mittels einer PCA ermittelt werden, welcher einzelne oder welche einzelnen Parameter den größten Einfluss auf das Erreichen der Produktspezifikation hat oder haben.

Gemäß der Definition des Begriffs Eduktspezifikation kann diese als aus mehreren Parametern gebildeter Vektor aufgefasst werden. Die einzelnen Parameter können hinsichtlich ihrer Relevanz, wie vorstehend zu den Stellgrößen erläutert, gewichtet werden, wobei beispielsweise berücksichtigt werden kann, welche Parameter sich einfach, beispielsweise die Temperatur, und welche Parameter sich nur mit hohem Aufwand, z. B. anderes Design des Reaktorgefäßes, verändern lassen.

Die einzelnen Parameter zur Bildung der Eduktspezifikationen können dann stochastisch, wie oben erläutert, ausgewählt werden.

Entsprechend weiterer Ausführungsvarianten kann vorgesehen sein, dass die erste Teilprozesssimulation weiterhin das Definieren eines zweiten Optimierungsparameters und einer zweiten Abbruchbedingung umfasst und dass in der ersten Teilprozesssimulation der Teilprozess mittels eines Simulationmodells simuliert wird, welches den Zusammenhang zwischen der Eduktspezifikation, den Stellgrößen, der Produktspezifikation und dem zweiten Optimierungsparameter abbildet, dass die erste Teilprozesssimulation weiterhin das Prüfen des Erfüllens der zweiten Abbruchbedingung für den erhaltenen zweiten Optimierungsparameter und falls die zweite Abbruchbedingung nicht vorliegt, erneutes gewichtetes stochastisches Auswählen von Stellgrößen und Simulieren des Teilprozesses bis die zweite Abbruchbedingung vorliegt, umfasst und dass diejenigen Stellgrößen als Soll-Stellgrößen für die Durchführung des Teilprozesses ausgegeben werden, bei denen weiterhin die zweite Abbruchbedingung erfüllt wird. Im Falle mehrerer parallel durchgeführter Simulationen sind obige Ausführungen so zu verstehen, dass ein erneutes stochastisches Auswählen von Stellgrößen etc. durchgeführt wird, wenn kein zweiter Optimierungsparameter der durchgeführten Simulationen die zweite Abbruchbedingung erfüllt.

Auch hierbei kann der Optimierungsparameter beispielsweise als Teil der Produktspezifikation aufgefasst und behandelt werden, indem die zu optimierenden Parameter als Parameter der Produktspezifikation angesehen werden.

Dies ermöglicht die Berücksichtigung eines Optimierungsparameters, wie vorstehend beschrieben, auch bei der Durchführung der ersten Teilprozesssimulation. Somit besteht die Möglichkeit, die Stellgrößen nicht nur in Hinblick auf die Produktspezifikation, sondern auch in Hinblick auf weitere Parameter zu optimieren, um ein möglichst effektives Verfahren, z. B. in Hinblick auf Zeit- und Materialeinsatz oder Energiebedarf, zu erreichen.

Gemäß verschiedenen Ausführungsvarianten können ein oder mehrere Simulationsmodelle ein Modell über die physikalisch-chemischen Eigenschaften der Edukte enthalten, welches beispielsweise mittels einer Ontologie und ermittelten Messwerten abgerufen und berechnet werden kann.

Unter einer Ontologie ist ein Verknüpfungsnetzwerk zu verstehen, dass eine Kontextualisierung von Daten enthält. Eine Ontologie bezeichnet somit eine Strukturdefinition mit der eine oder eine Verknüpfung verschiedener Informationen und Daten festgelegt wird. Diese Strukturdefinition wird häufig in eine Datenbank umgesetzt und ermöglicht somit den standardisierten Zugriff auf die Daten in der Struktur. Beispielsweise können die Messwerte und Rohdaten in der Ontologie gespeichert werden.

Eine Ontologie, welche im Umfeld der Chemie eingesetzt wird, wurde im Zuge des PubChemRDF Projektes entwickelt. Das PubChemRDF Projekt verknüpft PubChem Substanzen und Informationen zu diesen Komponenten und bildet diese im Resource Description Framework (RDF) Format ab. Demnach ermöglicht diese Ontologie einen standardisierten Austausch und Zugriff auf die genannten Komponenten. Die Definition des standardisierten Formates ermöglicht gleichzeitig die Speicherung innerhalb einer Datenbank.

Ein weiteres Beispiel stellt die "Chemical Information Ontology" (CHEMINF Ontologie) dar. Mit dieser Ontologie ist das Ziel verbunden, einen Standard für Informationen von chemischen Substanzen, Produkten und Strukturformeln mit chemischen Eigenschaften zu etablieren.

Weitere Beispiele für Ontologien im Bereich der Chemie sind in Datenbanken, wie z. B. PubChem, ChEMBL und ChEBI, enthalten.

Alternativ oder zusätzlich können ein oder mehrere Simulationsmodelle ein Modell aufweisen, welches das Design der Prozessanlage, z. B. einer Produktionsanlage, beschreibt (Anlagenmodell). Ein solches Anlagenmodell kann beispielsweise eine 3D-Modellierung für die Simulation der numerischen Strömungsmechanik (Computational Fluid Dynamics (CFD)-Simulation) für eine auf finite Elemente angewandte orthogonale Kollokation aufweisen.

Alternativ oder zusätzlich können ein oder mehrere Simulationsmodelle ein Stellgrößenmodell aufweisen. Es kann sich beispielsweise um ein Modell handeln, das mittels onlinePCA erhalten wird und einen Deep Learning Algorithmus mit archivierten Daten der Messwerte aus der Ontologie für den "Unsupervised Deep Learning" Algorithmus zur Gewichtung der statistischen Auswahl der Simulation umfasst. Mittels der archivierten Daten kann eine genauere Vorhersage der Signifikanz erreicht werden.

Alternativ oder zusätzlich können ein oder mehrere Simulationsmodelle ein Modell der Produktspezifikationen aufweisen.

Alternativ oder zusätzlich können ein oder mehrere Simulationsmodelle ein Kostenmodell für Stellgrößen des Teilprozesses aufweisen. Mittels dieses Modells ist die Berücksichtigung der Prozesskosten, z. B. der Produktionskosten einer chemischen Substanz, möglich, indem die Simulation der Stellgrößen unter Berücksichtigung der damit einhergehenden Kosten erfolgt. Beispielsweise kann eine längere Reaktionsdauer in Kauf genommen werden, wenn dadurch der notwendige Energiebedarf der Anlage verringert werden kann.

Gemäß verschiedenen Ausführungsvarianten können die Soll-Stellgrößen als Steuerempfehlung, z. B. an einen Bediener (Operator), ausgegeben werden. Dies kann beispielsweise bei der Steuerung eines chemischen Prozesses, z. B. in der Pharmaindustrie, sinnvoll sein, da häufig aufgrund von gesetzlichen Vorgaben eine zeitnahe automatische Änderung von Prozessstellgrößen nur in sehr eingeschränkten Bereichen erlaubt ist und zumeist begründet dokumentiert werden muss.

Die Ausgabe der Steuerempfehlung kann beispielsweise visuell oder akustisch erfolgen, z. B. indem vorteilhafte Stellgrößen angesagt oder auf einem Monitor dargestellt werden. Beispielsweise kann auch ein akustisches Signal ertönen, wenn ein Eingriff in die Prozesssteuerung empfehlenswert ist.

Alternativ können die Soll-Stellgrößen an eine Steuereinrichtung zur direkten Steuerung des Teilprozesses ausgegeben werden. Dadurch kann eine automatische Steuerung und ggf. Regelung ermöglicht werden und das Eingreifen eines Bedieners ist entbehrlich.

Gemäß verschiedenen Ausführungsvarianten können ein oder mehrere Simulationsmodelle durch jeweils ein nichtlineares Gleichungssystem, z. B. aus partiellen Differentialgleichungen, dargestellt sein oder werden. Es kann dynamisch simuliert werden.

Dynamisch bedeutet, dass zeitliche Änderungen mit berücksichtigt werden. Deshalb können dynamische Simulationen kurzzeitige Schwankungen in Prozessen oder Abläufen besser berücksichtigen. In einer stationären Betrachtungsweise ist dies nicht möglich.

Beispielsweise kann das Gleichungssystem partielle Differentialgleichungen aufweisen.

Gemäß verschiedenen Ausführungsvarianten können ein oder mehrere Gleichungssysteme eines oder mehrerer Simulationsmodelle, beispielsweise eines nichtlinearen Gleichungssystems, numerisch mittels einer auf finite Elemente angewandten orthogonalen Kollokation gelöst werden. Die auf finite Elemente angewandte orthogonale Kollokation kann sich besonders für chemische Prozesse eignen, da hier oft die beste Performanz (Berechnungsschritte, Genauigkeit und Simulationsdauer) für eine numerische Simulation eines chemischen Prozesses vorliegt.

Gemäß verschiedenen Ausführungsformen kann zumindest eine erste Teilprozesssimulation VPUi1 und/oder zumindest eine zweite Teilprozesssimulation VPUi2 cloudbasiert erfolgen. Dies bedeutet, dass die jeweilige Simulation nicht auf einem lokalen Rechner erfolgt, sondern auf einem anderen Rechner, der aus der Ferne, beispielsweise über das Internet, aufgerufen wird. Die Rechenkapazität kann somit über ein Netzwerk zur Verfügung gestellt werden. Die Datentransfergeschwindigkeit sollte besonders berücksichtigt werden. Eine Verknüpfung kann über einen Gate Server und eine VPN (Virtual Private Network)-Verbindung stattfinden.

Beispielsweise kann die Durchführung des erfindungsgemäßen Verfahrens mittels einer Hybrid-Cloud erfolgen, d. h. einer Server-Infrastruktur, die sowohl privat (geschützt) als auf öffentlich ist. Der private Teil, auch als Virtual Private Cloud (VPC) bezeichnet, kann genutzt werden, um die schützenswerten Betriebsabläufe der jeweiligen Produktionsstätte sicher abzubilden und unter Berücksichtigung der sicherheitstechnischen Vorschriften zu unterstützen.

Neben der Implementierung auf einer externen Server-Infrastruktur besteht zusätzlich die Möglichkeit einer Cloud-on-Plant (CoP) Lösung. Dies bedeutet, dass zwei redundante Hochleistungsrechner (eng. High Performance Computing, HPC)-Server in der näheren Umgebung der Prozessanlage installiert und betrieben werden können. Dabei ist bei der CoP-Lösung besonders auf die Datensicherheit, Datensicherung und auf das Recovery-Management zu achten. Grundsätzlich ist die CoP eine kostenintensivere Lösung als die Hybrid-Cloud Lösung.

Das erfindungsgemäße Verfahren kann beispielsweise zur Steuerung eines chemischen Prozesses, z. B. bei der Herstellung eines Medikaments, verwendet werden.

Eine erfindungsgemäße Vorrichtung zur Durchführung des erfindungsgemäßen Verfahrens weist Sensoren zur Ermittlung von Werten, welche den physikalisch-chemischen Zustand des Teilprozesses beschreiben, auf. Zudem ist eine Verarbeitungseinheit vorgesehen, die ausgelegt ist zum Erstellen einer ersten Eduktspezifikation mittels der Werte, zur gewichteten stochastischen Auswahl von Stellgrößen des Teilprozesses, zur Simulation des Teilprozesses mittels eines Simulationsmodells, der Werte und der stochastisch ausgewählten Stellgrößen des Teilprozesses, zum Vergleich des Ergebnisses der Simulation mit der Produktspezifikation des Teilprozesses, zur Durchführung weiterer Simulationen zur Erreichung der gewünschten Produktspezifikation, zur Vorgabe einer zweiten Eduktspezifikation und zur Simulation des Teilprozesses mittels des Simulationsmodells, der Soll-Stellgrößen und der zweiten Eduktspezifikation zum Ermitteln einer zweiten Eduktspezifikation.

Des Weiteren sind ein oder mehrere Ausgabemittel zur Ausgabe der Soll-Stellgrößen für die Durchführung des Teilprozesses und zur Ausgabe der zweiten Eduktspezifikation vorgesehen.

Außerdem kann ein Computer-Programm-Produkt vorgesehen sein, wobei das Computer-Programm-Produkt auf einem nichtflüchtigen computerlesbaren Medium enthalten ist und durch einen Computer ein Verfahren zur adaptiven und optimierenden Steuerung eines Prozesses, wie vorstehend beschrieben, ausgeführt wird.

Die Erfindung soll nachfolgend anhand eines Ausführungsbeispiels näher erläutert werden. Die zugehörigen Zeichnungen zeigen:
- Fig. 1: Übersicht über die Ontologie im Framework,
- Fig. 2: Verfahrensfließbild der Simulation und der Empfehlung,
- Fig. 3: Übersicht über ein PVT-Framework,
- Fig. 4: schematische Darstellung des Ablaufs eines erfindungsgemäßen Verfahrens für einen Teilprozess,
- Fig. 5: schematische Darstellung des Ablaufs eines erfindungsgemäßen Verfahrens für mehrere miteinander verknüpfte Teilprozesse.

In den im Folgenden erläuterten Beispielen wird auf die beigefügten Zeichnungen Bezug genommen, die Teil dieser bilden und in denen zur Veranschaulichung spezifische Ausführungsformen gezeigt sind, in denen die Erfindung ausgeübt werden kann.

Es versteht sich, dass andere Ausführungsformen benutzt und strukturelle oder logische Änderungen vorgenommen werden können, ohne von dem Schutzumfang der vorliegenden Erfindung abzuweichen. Die Erfindung ist daher nicht auf die hier genannten Prozessparameter, Apparaturen und Materialien beschränkt.

Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

In den Figuren werden identische oder ähnliche Elemente mit identischen Bezugszeichen versehen, soweit dies zweckmäßig ist.

Die Erfindung soll nachfolgend anhand eines Prozesses P umfassend zwei Teilprozesse, Teilprozess RPU1 und Teilprozess RPU2, erläutert werden. Dabei läuft der gesamte Prozess zeitgleich ab, während der Teilprozess RPU2 räumlich getrennt nach dem Teilprozess RPU1 stattfindet.

Die Ontologie stellt die Datengrundlage für die Messgerätekalibrierung und für den adaptiven Simulator zur Verfügung und sichert gleichzeitig alle Messdaten (Modell- und Rohdaten). Ein solches System kann als Datenmanagementsystem bezeichnet und sollte für die Anwendung in den chemischen Produktionsprozessen den Mindestanforderungen von ISO 9001 genügen.

Die Ontologie gewährleistet die kontextualisierte Speicherung von Simulationsmodellen, Messwerten, OPC Daten, Rohdaten, Prozessstellgrößen, Steuerempfehlungen sowie Ein- und Ausgabevektoren und zugeordnete Messgeräte je Anlagenmodul und je Zeitschritt. Das Modell Anlage besteht aus mindestens einem Anlagenmodul (Prozesseinheit), zusätzlichen Informationen und den Produktspezifikationen (PT - Produktionszielen).

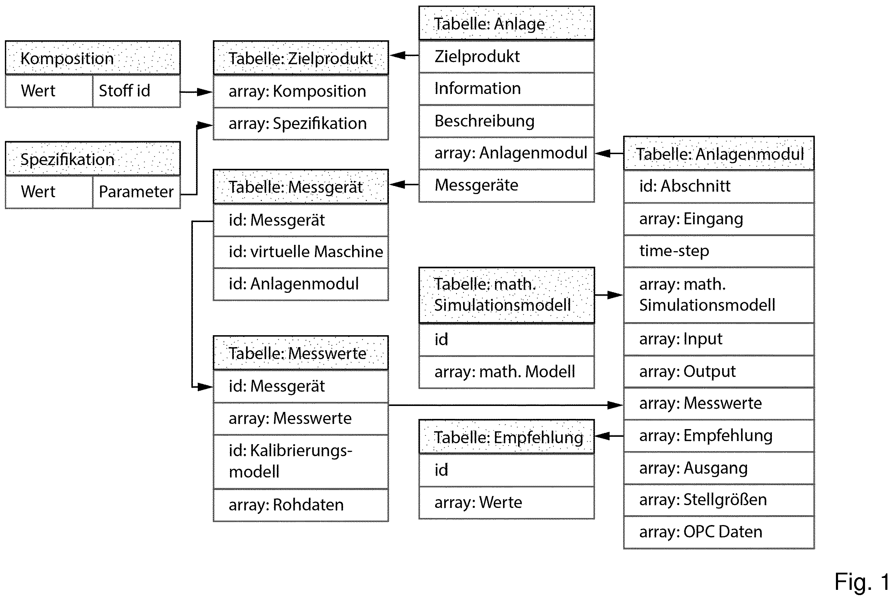

Die Ontologie gemäß Fig. 1 setzt sich aus zehn verschiedenen Tabellen zusammen, die jeweils miteinander verknüpft sind. Auf der rechten Seite der Fig. 1 ist die Tabelle "Anlagenmodul" dargestellt. Ein Anlagenmodul definiert den zu betrachtenden Bilanzraum. In diesem Bilanzraum erfolgt die mathematische Modellierung für die Simulation und die Optimierung. Jedes Anlagenmodul erhält eine eindeutige ID (Identifikator), die in der Tabelle Anlage zu einer "Anlage" referenziert wird.

Des Weiteren werden die einzelnen Anlagenmodule miteinander über das "Eingang"-Feld und das "Ausgang"-Feld verknüpft. In diesem Feld werden die vorstehenden bzw. nachfolgenden Anlagenmodule registriert. Zusätzlich steht jedem Anlagenmodul ein "Input Array" und ein "Output Array", beispielsweise für die Definition des übergebenden Stoffstromes, zur Verfügung.

Die für die Simulation benötigte mathematische Modellbeschreibung wird eindeutig aus der Tabelle "mathematisches Simulationsmodell" dem Anlagenmodul zugeordnet. Des Weiteren werden die Werte der Steuerempfehlungen über ein Array vom jeweiligen Anlagenmodul ausgegeben und gesichert. Die Größe des Steuerempfehlungsarrays wird durch die Werte des Arrays der zur Verfügung stehenden Stellgrößen festgelegt.

Das Messwerte-Modell, welches mit dem Messgeräte-Modell verknüpft ist, wird direkt über eine ID dem jeweiligen Anlagenmodul zugeordnet. Es enthält Informationen zum verwendeten Messgerät, den Kalibrierungsmodellen und den Messwerten, die für die Modellanpassung und die anschließende Simulation verwendet werden. Weitere Modellanpassungen der Simulationsmodelle werden mit Hilfe der Open Platform Communications-Werte (OPC-Werte) durchgeführt. Zusätzlich werden die Rohdaten, die zum jeweiligen Messwert führen, zum Anlagenmodul referenziert.

Da ein kontinuierliches Abbild des Prozesses erstellt sowie kontinuierliche Empfehlungen zur Prozesssteuerung ausgegeben werden sollen, wird in der Anlagenmodul-Tabelle (Modell "Anlagenmodul", d. h. das Modell des Teilprozesses) nach einem definierten Zeitintervall (vom Bediener festgelegt) ein neuer Eintrag erstellt.

Jeder Eintrag der Anlagenmodul-Tabelle wird der Anlage-Tabelle zugeordnet. Demnach bildet das Modell "Anlage" die Produktionsanlage bestehend aus einer Vielzahl an Anlagenmodulen mit einer zeitlichen Änderung des physikalisch-chemischen Zustands ab. Zusätzlich erhält jeder Eintrag in der Anlage-Tabelle eine kurze Beschreibung und Informationen zum jeweiligen Prozess.

Des Weiteren wird die Produktspezifikation im Modell "Zielprodukt" definiert und automatisch dem zuletzt stehenden Anlagenmodul im "Output Array" als Zielwertdefinition zur Verfügung gestellt. Bei dem Output-Array handelt es sich um die definierte Produktspezifikation PTᵢ. Das Modell "Zielprodukt" enthält die Zielzusammensetzungen und weitere Spezifikationen, welche über die ID des jeweiligen Komposition-Modells verknüpft werden.

Für die Simulation von chemischen Reaktionen werden unterschiedliche Daten benötigt. Zu diesen Daten zählen sowohl Stoffdaten als auch Naturkonstanten. Da die Stoffdaten meist nicht vollständig abgebildet werden können, werden fehlende Stoffdaten durch mathematische Zusammenhänge, wie zum Beispiel die Virial-Gleichungen (Erweiterungen der allgemeinen Gasgleichung durch eine Reihenentwicklung nach Potenzen von 1/Vm), beschrieben und für die Simulation bereitgestellt. Die Ontologie unterstützt aufgrund der Datenintegrität auch die Erstellung des Simulationsmodells.

Die beschriebene Ontologie ermöglicht eine Verlagerung des Kalibrierungs- sowie des Modellierungsvorganges vom Labor direkt in die chemische Anlage. Mit dieser Vorgehensweise kann ein Iterationsschritt in der Modellierung und Kalibrierung eingespart werden, so dass eine schnellere und an den realen Prozess angepasste Modellerstellung für das Messgerät (Kalibrierung oder Methodenerstellung) sowie für die Simulation ermöglicht wird. Bessere Simulationsergebnisse führen zu verbesserten Optimierungsergebnissen und zu zielführenden Steuerempfehlungen.

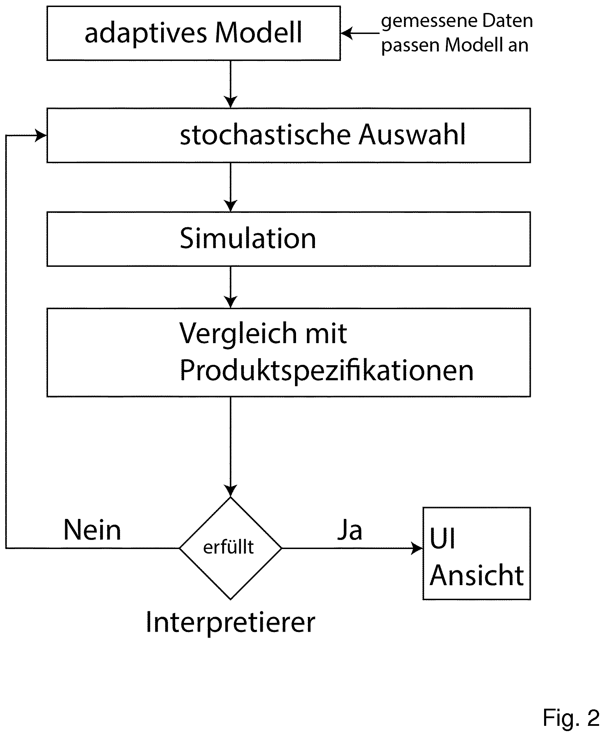

Das zeitaufgelöste Modell "Anlagenmodul" enthält zahlreiche Daten und Informationen des definierten Bilanzraums. Der Bilanzraum wird durch verschiedene Daten und Informationen, welche in der Fig. 1 dargestellt sind, charakterisiert. Aus der Verarbeitung dieser Daten und Informationen soll am Ende jeder erfolgreich abgeschlossenen Optimierung eine messwertangepasste, modell- und simulationsbasierte Steuerempfehlung, beispielsweise an eine Benutzeroberfläche, ausgegeben werden. Der dazu notwendige Verarbeitungsablauf wird in Fig. 2 dargestellt.

Über die Ontologie gemäß Fig. 1 werden gespeicherte Messwerte vom aktuellen Produktionsprozessstatus für die initiale Modellanpassung abgerufen, d. h. es wird die erste Eduktspezifikation ETᵢ1 erstellt. Die Modellanpassung, z. B. einer physikalisch-chemischen Eigenschaft, erfolgt u. a. durch eine Basislinien-Korrektur zwischen den Wertepaaren mit Hilfe des Messwerte-Arrays. Dies dient als Modellinitialisierung für die dynamische Simulation.

Es handelt sich hierbei um eine Minimierungsaufgabe, welche für die Modellparameteranpassung gelöst werden muss. Hierfür wird die Minimierung der Summe der Fehlerquadrate verwendet.

Als Lösung entstehen Parameter ωt mit denen das Simulationsmodell adaptiert (angepasst) wird. Im nächsten Schritt erfolgt die Optimierung der Stellgrößen. Das angepasste Modell dient als Grundlage für die optimierende Simulation.

Die optimierende Simulation besteht aus einem Simulationsoptimierer und einem Solver. Der Optimierer variiert die möglichen Stellgrößen in vorgegebenen Grenzen, die auf das mathematische Modell anwendbar und auch signifikant für den Produktionsprozess des Produktes sind. So könnte der Simulationsoptimierer beispielsweise einen Volumenstrom variieren, was einen direkten Einfluss auf die Verweilzeit des Reaktionsmediums im Reaktor hat.

Der Simulationsoptimierer dient der optimalen Bestimmung der Stellgrößen. Hierfür stehen unabhängig vom konkret betrachteten Prozess P eine große Anzahl an Optimierungsverfahren zur Verfügung, beispielsweise Simplex Verfahren, Box-Wilson Verfahren, Achsenparallele Suche, oder Mutations-Selektions Algorithmen.

Nach der erfolgten Optimierung wird mit Hilfe des angepassten Modells innerhalb des Bilanzraums ein neues "Input Array" (Fig. 1) berechnet. Dabei kann es vorkommen, dass sich aufgrund der zeitdiskreten Bestimmung und somit der Speicherung der Messwerte die Aktualisierung des "Input Arrays" verspätet. Dies hat zur Folge, dass während der Berechnung eines Bilanzraumes noch auf das letzte verfügbare "Input Array" zurückgegriffen wird.

Am Ende eines Simulationsdurchlaufs wird das "Ausgang Array" mit den jeweiligen Simulationsergebnissen verglichen. Der Vergleich erfolgt über die Summe einzelner absoluter Differenzen zwischen "Simulations-Parameter Array" (simulierte Produktspezifikation) und "Ausgang Array" (vorgegebene Produktspezifikation des einzelnen Teilprozesses).

Überschreitet der Summenwert ein vorher festgelegtes Maximum, wird die Simulation erneut mit neu-eingestellten Stellgrößen ausgeführt, wobei auch mehrere Simulationen parallel durchgeführt werden können. Die Neueinstellung der Stellgrößenerfolgt mit Hilfe von Optimierungsmethoden, wobei unterschiedliche Methoden, wie z. B. Gauss-Seidel-Verfahren, Gradientenverfahren, Monte-Carlo-Simulationen oder Mutations-Selektions-Algorithmen verwendet werden können.

Dieser beschriebene Ablauf wird so lange wiederholt bis ein gültiges Simulationsergebnis (Simulations-Parameter Array) generiert und demnach die optimalen Stellgrößenparameter ermittelt wurden. Im Anschluss wird das "Simulations-Parameter Array", d. h. die Soll-Stellgrößen s-PPi, in Form einer Steuerempfehlung über die Benutzeroberfläche dem jeweiligen Operator angezeigt.

Anders ausgedrückt werden über eine Ontologie gespeicherte Messwerte in Echtzeit für die initiale Modellanpassung abgerufen. Die Modellanpassung kann zum Beispiel durch eine Baseline-Korrektur zwischen den Wertepaaren des Eingangs-Arrays und des Ausgangs-Arrays erfolgen.

Nach der erfolgten Anpassung an diese Messwerte dient das so entstandene Modell als Grundlage für die Simulation.

Der numerische Simulator rechnet innerhalb des Bilanzraums und der Eingangs- und Ausgangsarrays, welche über 1,5 Zeitschritte, abhängig vom Messintervall, noch von dem jeweiligen benachbarten Bilanzraum abgerufen werden können.

Am Ende eines Simulationsdurchlaufs wird das Ergebnis-Array mit dem jeweiligen Ausgangs-Array (Nachbar Eingangs-Array) verglichen. Der Vergleich erfolgt über die Summe aller absoluten Differenzen zwischen Sim-Parameter-Array und Ausgangs-Array.

Überschreitet der Summenwert ein vorher festgelegtes Maximum, wird der Simulator erneut mit neu eingestellten Parametern ausgeführt. Die Neueinstellung der StellgrößenParameter erfolgt mit Hilfe von Optimierungsmethoden. Dabei können hier bereits genannte Methoden

Die Simulation von chemischen Prozessen kann das Lösen einer Vielzahl an Bilanzen voraussetzen. Neben der Reaktionskinetik können die Stoff- und Wärmebilanz sowie die Impulsbilanz die Grundlagen für die Simulation von Reaktionen darstellen. Hierbei können vor allem die Berechnungen von Druck-, Geschwindigkeits-, Konzentrations- und Wärmeverläufen des betrachteten Prozesses von Interesse sein.

Der hohen Komplexität der zu lösenden Bilanzen steht ein zeitnahes Informationsbedürfnis entgegen. Um diesen Anforderungen gerecht zu werden, sollten die systembeschreibenden Bilanzen vereinfacht werden.

Eine Strategie stellt die Verringerung der zu betrachtenden Dimensionen dar. Hierbei sollte darauf geachtet werden, dass vereinfachende Annahmen in den Bilanzen eingeführt werden sollten. Auch mit der Verringerung der Dimensionen ist zumeist ein nichtlineares, miteinander verknüpftes Gleichungssystem zu lösen.

Deshalb kann das Gleichungssystem nicht analytisch gelöst werden, weshalb die Implementierung eines numerischen Solvers angezeigt sein kann.

Nutzbare Simulationsmethoden können die Finite-Elemente-Methode (FEM), die Finite-Differenzen-Methode und die auf finite Elemente angewendete orthogonale Kollokation (OK) sein.

Eine Vielzahl an numerischen Lösungsmethoden können verwendet werden, wie z. B. Taylor-Reihe Methode; Finite Elemente für Partiale Differentialgleichungen; Elliptische, Parabolische, Hyperbolische Gleichungen; Euler Methode; Runge-Kutta Methode.

Neben einem leistungsstarken Solver sollte genügend Rechenleistung zur Verfügung gestellt werden. Dies kann realisiert werden, indem das Anpassen und/oder das Echtzeitoptimieren des Simulationsmodells cloud-basiert erfolgen. Beispielsweise kann ein flexibler und leistungsfähiger Simulator als Cloud-Anwendung implementiert werden.

Beispielshaft werden in einem ersten Schritt gemessene Daten des aktuellen Prozess-Status (Werte Si) mit Hilfe von PAT-Tools und OPC-Daten erhalten. Mit diesen Daten wird das Simulationsmodell angepasst.

Nach diesem Schritt wird dieses Modell genutzt und über die Stellgrößen mit Hilfe des Simulators in Echtzeit optimiert. Das simulierte Ergebnis wird mit der Soll-Produktspezifikation s-PTᵢ verglichen.

Wenn der Vergleich negativ ist, startet die Simulation und die Optimierung erneut. Wenn der Vergleich positiv ist, werden diese berechneten und optimierten Stellgrößen (Parameter) über eine Benutzer-Schnittstelle einem Bediener der Anlage als Steuerempfehlung OR ausgegeben.

Zur Strukturierung und Implementierung kann eine MySQL Datenbank in AWS Deployment mit Hilfe von Django (Python Entwicklungsframework) definiert und generiert werden. Dazu kann die gesamte Anlage aus sogenannten Anlagenmodulen, das sind sinnvolle Bilanzierungsabschnitte, aufgebaut sein. Zusätzlich werden alle Messgeräte registriert und die Zielprodukte der Anlage zugeordnet. Des Weiteren können Informationen und eine Beschreibung hinzugefügt werden.

Das Anlagenmodul besteht aus einer eindeutigen ID und Zeitstempel sowie Speicherarrays für die Ein- und Ausgabe-Werte, Simulationsmodelle, Messwerte, OPC Daten, Stellgrößen und Empfehlungen. Diese Daten werden periodisch und kontinuierlich erfasst und berechnet. Hierfür werden die Messgeräte dem Anlagenmodul zugeordnet.

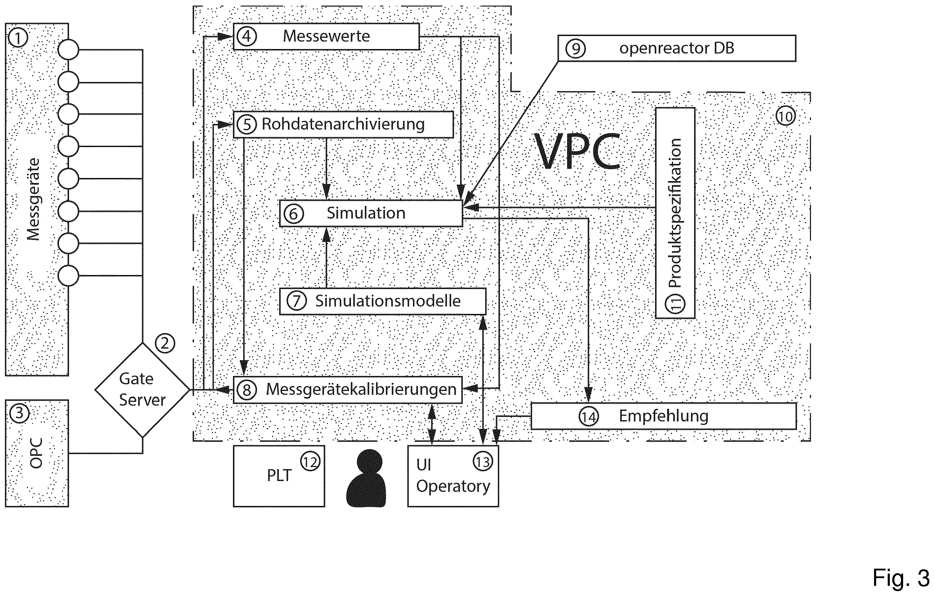

Fig. 3 stellt eine Übersicht über ein Process Virtualization Technology (PVT)-Framework dar. Unter 1 werden die Messgeräte zusammengefasst, die nicht an den OPC-UA-Service des Standorts integriert wurden. Hierunter können z. B. Raman NIR oder Massenspektrometer zählen. Sie bilden eine Erweiterung des üblichen Geräteparks eines Standortes und werden mit dem Gate Server unter 2 verbunden.

Der Gate Server 2 realisiert mittels standardisierter Schnittstelle die Massive Machine to Machine Kommunikation (MM2M). Er ist wiederum mit der Cloud Infrastruktur über ein VPN verbunden. Mit Hilfe von sogenannten virtuellen Maschinen werden die Messgeräte über die Cloud Infrastruktur gesteuert und kalibriert. Hauptaufgabe des Gate Servers ist es, die Daten der Messgeräte und des OPCs abzurufen und der Cloud Anwendung bereitzustellen. Der Gate Server übermittelt die Daten aus dem OPC und die Messwerte der Messgeräte an eine Datenbank in der Cloud Infrastruktur.

Die Messgerätekalibrierung unter 8 erfolgt während des Einfahrens der Produktionsanlage. Die Kalibrierungsmodelle, oder auch Methoden genannt, werden abgespeichert.

Der OPC Service unter 3 läuft auf einem Server, der verschiedene Daten z. B. über Füllstand, Temperatur usw. periodisch abfragt und speichert. Dabei können teilweise noch keine Echtzeit Anwendungen und multi-direktionale Kommunikation unterstützt werden, weshalb die Installation des Gate Servers notwendig ist.

Neben den Messwerten werden gleichzeitig auch die Rohdaten (Rohspektren) gespeichert, wie unter 5 Rohdatenarchivierung dargestellt ist.

Im Mittelpunkt steht der Bereich Simulation, welcher den adaptiven Simulator und den Simulationsoptimierer beinhaltet, welcher anschließend detailliert beschrieben wird. Alle adaptierten und simulierten Modelle werden kontextualisiert gespeichert (Fig. 3, Nr. 7). Zudem müssen in der Simulation Daten verarbeitet und auch die Soll-Produktspezifikationen PTi bereitgestellt werden. Am Ende jedes Optimierungsdurchlaufs werden Steuerempfehlungen für Stellgrößen generiert, gespeichert und letztendlich dem Operator über eine Webapplikation bereitgestellt. Der Operator entscheidet dann selbstständig, welche Änderungen er in das Prozessleitsystem übernehmen möchte.

In Fig. 3 unter 9 wird die OpenReactor Datenbank dargestellt. Die OpenReactor Datenbank beinhaltet die Ontologie, welche die Datengrundlage für die Simulationen zur Verfügung stellt. openReactor ist eine offene Reaktions- und Stoffdatenbank.

Fig. 3, Nr. 10 stellt Virtuell Private Cloud (VPC), einen abgeschlossenen und geschützten Bereich in einer Cloud Infrastruktur, dar.

Die Produktspezifikationen PTi (Fig. 3, Nr. 11) bezeichnen die gewünschten Produkteigenschaften und dienen der Definition des Zielwertbereichs. Hierbei werden die Simulationsergebnisse mit diesen Zielwerten verglichen. Weiterhin wird dem jeweiligen Zielwertebereich eine Bewertung hinzugefügt. Diese Bewertung hat einen Einfluss auf die Zielfunktion der Optimierung.

Aus der Optimierung der Stellgrößen des an den Messwerten adaptierten Modells werden Steuerempfehlungen generiert und in einer Bedienoberfläche dem Operator angezeigt (Fig. 3, Nr. 14).

Fig. 3, Nr. 13 stellt die Nutzeroberfläche dar. Des Weiteren sind hier der aktuelle Prozessstatus, die Messgeräte, die Kalibrierungs-, die Simulationsmodelle und eine Meldefunktion erreichbar.

Für den Fall, dass eine direkte Steuerung nicht möglich ist, bekommt der Operator die Steuerempfehlungen präsentiert und muss sie bewerten und manuell in das Prozessleitsystem (PLT) übertragen (Fig. 3, Nr. 12).

Das beschriebene Framework und der Simulator können in Form eines AWS Deployments umgesetzt werden. Für die Simulation von chemischen Reaktionsverläufen können der Mikro-Web-Service von Amazon Web Services (AWS) namens AWS Lambda und zusätzlich noch MySQL Datenbanken und Elastic Cloud (EC2) Instanzen verwendet werden.

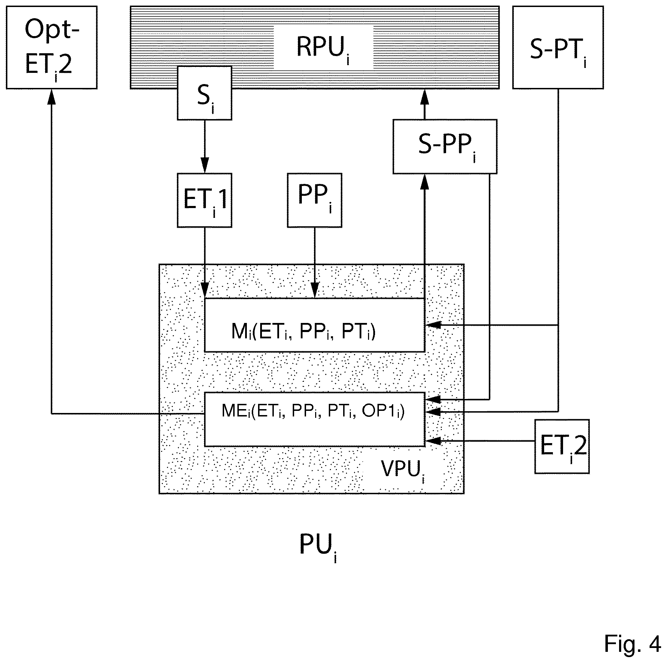

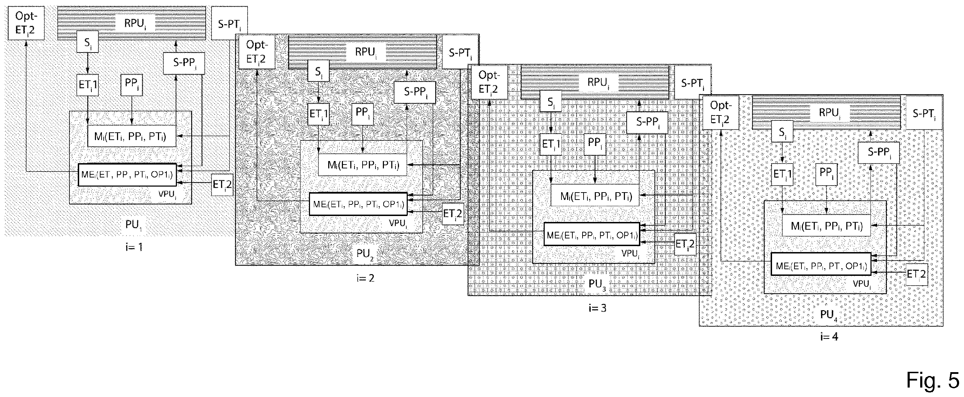

Die Fig. 4 und Fig. 5 fassen die Funktionsweise der adaptiven und optimierenden Prozesssteuerung zusammen. In Abb. 4 sind eine reale Prozesseinheit RPUᵢ, was gleichzusetzen ist mit einem definierten Bilanzraum und eine dazugehörige virtuelle Prozesseinheit VPUᵢ, die das mathematische Abbild darstellt und die Funktionalitäten Simulation und Optimierung beinhaltet, dargestellt. Anhand von Werten S (Sensordaten) wird ein nicht lineares, zeitabhängiges und prozessbeschreibendes Gleichungssystem aus u. a. partiellen Differentialgleichungen adaptiert (Simulationsmodell Mᵢ). Nach der Adaption kann eine Echtzeitoptimierung erfolgen.Hierfür werden die Stellgrößen PPᵢ (Prozessparameter) unter Berücksichtigung der Soll-Produktspezifikation s-PTᵢ und mittels Minimierung einer Kostenfunktion (Interpretierer in Fig. 2) optimiert.

Das gewonnene Modell ist ein nicht lineares Gleichungssystem. Die Lösung erfolgt deshalb numerisch mit Hilfe der auf finite Elemente angewandten orthogonalen Kollokation (Simulation in Fig. 2). Das Resultat stellen Soll-Stellgrößen s-PPᵢ dar, die als Steuerempfehlungen OR ausgegeben werden. Zusätzlich werden diese Soll-Stellgrößen s-PPᵢ in das Modell MEᵢ, das auch dem Modell Mᵢ entsprechen kann, eingefügt und es erfolgt die Optimierung der zweiten Eduktspezifikation ETᵢ2, sodass eine optimierte zweite Eduktspezifikation opt-ETᵢ2 ausgegeben werden kann.

Die Erfindung soll nachfolgend anhand eines Beispiels aus der chemischen Industrie, der industriellen Oxidation von Methanol zu Formaldehyd, erläutert werden. Der Gesamtprozess P umfasst fünf Teilprozesse RPU₁, RPU₂, RPU₃, RPU₄, RPU₅. Der erste Teilprozess RPU₁ betrifft die Bereitstellung der Edukte Methanol und synthetische Luft. Der weiteren Teilprozesse RPU₂, RPU₃, RPU₄, RPU₅ betreffen den eigentlichen chemischen Prozess. Die Anwendung des erfindungsgemäßen Verfahrens auf den ersten Teilprozess ist optional, so dass auch der hier als zweite Teilprozess RPU₂ beschriebene Teilprozess als erster Teilprozess RPU₁ aufgefasst werden kann. Die Nummerierung der weiteren Teilprozesse würde sich entsprechend ändern. Die Simulation und Optimierung eines einzelnen Teilprozesses RPUᵢ wird mit Bezug auf Fig. 4 beschrieben. Die Verknüpfung der einzelnen Teilprozesse RPU₁ bis RPU₄ ist in Fig. 5 dargestellt.

Im zweiten Teilprozess RPU₂ wird die synthetische Luft mit Methanol beladen, sodass eine Zielzusammensetzung (Vol.-%) erreicht wird. Dabei ist die Beschreibung der ZielZusammensetzung als Soll-Produktspezifikation s-PT₂ gespeichert. Zudem wird ein Toleranzbereich für die Soll-Produktspezifikation s-PT₂ vorgegeben.

Mittels des erfindungsgemäßen Verfahrens wird in einer ersten Teilprozesssimulation VPU₂1 des zweiten Teilprozesses RPU₂ simuliert, mit welchen Soll-Stellgrößen s-PP₂ die Soll-Produktspezifikation s-PT₂ optimal erreicht werden kann. Als Soll-Stellgrößen s-PP₂ werden Werte für die Stellgrößen s-PP₂ Temperatur, Druck und Volumenstrom ausgegeben.

Dafür wird mit der ersten Eduktspezifikation (ET₂1) zuerst mittels einer PCA die Signifikanz einer Stellgrößenänderung zur benötigten Eduktspezifikationsänderung, die zum Erreichen der Produktspezifikations-PT₂ benötigt wird, ermittelt. Die Signifikanz verändert die stochastische Auswahl dahingehend, dass die bedeutendsten (signifikantesten) Stellgrößen PP₂ bei der stochastischen Auswahl der Stellgrößen PP₂ und anschließender dynamischer Simulation eine kleine Schrittweite erhalten. Weniger signifikante Stellgrößen PP₂ werden durch größere Schrittweiten weniger berücksichtigt.

Hierbei wird ein teilprozessspezifischer Grenzwert festgelegt und bei der Betrachtung werden die Quadrate der berechneten Signifikanzwerte berücksichtigt. Für das betrachtete Ausführungsbeispiel wird durch die PCA eine große Signifikanz für den Druck und der Temperatur für die Beladung von Luft mit Methanol berechnet. Somit wird der Wertebereich für die stochastische Auswahl wie beschrieben angepasst. Der erste Teilprozess RPU₂ wird durch ein mathematisches Modell, das Simulationsmodell M₂, was die Beladung des Luftstromes in einer Blasensäule in Abhängigkeit zum Volumenstrom Luft, Heiztemperatur, Füllstand Methanol und Innendruck beschreibt, abgebildet.

In der Hinsimulation (erste Teilprozesssimulation VPU₂1) wird unter Berücksichtigung von Werten S₂, die die aktuellen physikalisch-chemischen Eigenschaften der Edukte beschreiben und zur Erstellung der ersten Eduktspezifikation ET₂1 dienen, das erweiterte Simulationsmodell ME₂, welches einen zweiten Optimierungsparameter OP₂2 beinhaltet, angepasst und dynamisch simuliert.

Beispielsweise können parallel 8000 Trajektorien mit verschiedenen Stellgrößenvarianten berechnet werden. Nach Abschluss der ersten Teilprozesssimulation VPU₂1 werden die Stellgrößen PP₂ als Soll-Stellgrößen s-PP₂ ausgegeben, die die Soll-Prozessspezifikation s-PT₂ am besten (Schwellwertvergleich) trifft.

Im betrachteten Ausführungsbeispiel wird die Soll-Produktspezifikation s-PT₂ innerhalb des vorgegebenen Toleranzbereichs durch eine Erhöhung der Heiztemperatur um 10 K, einer Innendruckerhöhung auf 40 bar und die Einstellungen eines Volumenstroms für synthetische Luft von 5 m³/s und eines Volumenstroms für Methanol von 1 m³/s, um einen Füllstand von 125 cm in der Blasensäule zu erreichen. Diese Werte werden als Soll-Stellgrößen s-PP₂ ausgegeben.

In der sich anschließenden zweiten Teilprozesssimulation VPU₂2 des zweiten Teilprozesses RPU₁(Rücksimulation) wird eine optimierte zweite Eduktspezifikation opt-ET₂2 ermittelt. Die Ermittlung erfolgt wiederum über eine Bewertung der Wertebereiche. Über die onlinePCA wird die Gewichtung berechnet.

Hierbei wird mit gleichbleibenden Soll-Stellgrößen s-PP₂, welche mittels der ersten Teilprozesssimulation VPU₂1 ermittelt wurden, die zweite Eduktspezifikation ET₂2 so verändert, dass die Soll-Produktspezifikation s-PT₂ am besten (Schwellwertvergleich) getroffen wird. Die Simulation des zweiten Teilprozesses VPU₂2 erfolgt mittels eines erweiterten Simulationsmodells ME₂, welches auch einen Optimierungsparameter OP₂1 beinhaltet. Der erste und zweite Optimierungsparameter OP₂1, OP₂2 können einander entsprechen, sodass für die erste und zweite Teilprozesssimulation VPU₂1, VPU₂2 dasselbe erweiterte Simulationsmodell ME₂ verwendet wird.

Als Resultat wird im betrachteten Ausführungsbeispiel eine optimierte zweite Eduktspezifikation opt-ET₁2 mit einer Mediumstemperatur des Luftstromes von 335 K und einer Beladung der Luft mit Methanol von 34 % ermittelt und gespeichert.

Die optimierte zweite Eduktspezifikation opt-ET₂2 dient dem Vorgänger-Teilprozess RPU₁, in diesem Fall die Lagerung und der Einkauf als Soll-Produktspezifikation s-PT₁. Dabei ist anzumerken, dass sich die Soll-Produktspezifikation s-PT₂ aufgrund von zwei parallel angeordneten Festbett-Reaktoren im dritten Teilprozess RPU₃ aus dem Mittelwert der opt-ET_{3,1}2 und opt-ET_{3,2}2 errechnet.

Für den dritten Teilprozess RPU₃ wird der Prozessstrom geteilt und in zwei parallel angeordneten Festbett-Reaktoren und mit Hilfe eines Katalysators zur Reaktion gebracht (Teilprozesse RPU_{3,1} und RPU_{3,2}). Hier reagiert der Luftsauerstoff mit Methanol zu Formaldehyd. Hierbei soll ein Umsatz an Methanol von 100 % erreicht werden.

Mittels des erfindungsgemäßen Verfahrens wird mit Hilfe der beschriebenen Einzelschritte simuliert, wie die Soll-Produktspezifikation s-PT₃ optimal erreicht werden kann. Es werden hierfür die Werte für die Soll-Stellgrößen (s-PP_{3,1} und s-PP_{3,2}) Temperatur, Druck und Volumenstrom aus.

Mittels der zweiten Teilprozesssimulation VPU₃2 des dritten Teilprozesses RPU₃ (Rücksimulation) wird eine optimierte zweite Eduktspezifikation opt-ET₃2 ermittelt und ausgegeben, welche im Beispiels als Soll-Produktspezifikation s-PT₂ des zweiten Teilprozesses RPU₂ dient. Das Ergebnis der Simulationen sind ein gleichbleibender Volumenstrom und Druck sowie eine Erhöhung der Temperatur auf 523 K. Dabei werden Soll-Stellgrößen (s-PP₃) über die dynamische Simulation bestimmt, mit denen die vorgegebene Soll-Produktspezifikation s-PT₃ erreicht wird (100 % Umsatz von Methanol zu Formaldehyd und 0 Vol-% Sauerstoff).

In der Rücksimulation werden nun die bestimmten Soll-Stellgrößen s-PP₃, wie beschrieben mit verschiedenen zweiten Eduktspezifikationen ET₃2 über der optimalen Soll-Produktspezifikation s-PT₃ ermittelt. Hierbei könnte ein Ergebnis sein, dass der Sauerstoff schon vollständig verbraucht ist, bevor ein vollständiger Methanolumsatz erreicht wird. Dies würde bedeuten, dass die optimierte zweite Eduktspezifikation opt-ET₃2 (entsprechend der Sollproduktspezifikation s-PT₂) einen höheren Sauerstoffgehalt enthält, welche in der Soll-Produktspezifikation s-PT₁ wiedererscheinen wird, da der dritte Teilprozess RPU₃ diesen einzelnen Parameter der Eduktspezifikation ET₃ nicht beeinflussen kann. Somit wird am Anfang des Prozesses P eine veränderte Zusammensetzung der synthetischen Luft als opt-ET₂2 ausgegeben.

Das 523 K warme Reaktionsgemisch mit der ersten Eduktspezifikation ET₄1 des vierten Teilprozesses RPU₄ wird im vierten Produktionsschritt kondensiert, um das Nebenprodukt Wasser zu eliminieren. Hierfür soll das Reaktionsgemisch auf ca. 290 K (spezifiziert in der Soll-Produktspezifikation s-PT₄) abgekühlt werden. Hierfür wird zusätzlich im Simulationsmodell M₄ des Teilprozesses RPU₄ eine Kühlung mit den Stellgrößen PP₄ Eingangstemperatur und dem Volumenstrom berücksichtigt.

Mit Hilfe der Kondensation sollen Wasser und Formaldehyd getrennt werden, da Wasser bei moderaten Temperaturen bereits flüssig vorliegt. Die Soll-Produktspezifikation s-PT₄ spezifiziert beide Phasen. Die erste Teilprozesssimulation VPU₄1 berechnet die der Soll-Produktspezifikation s-PT₄ genügenden Soll-Stellgrößen s-PP₄.

Das Ergebnis der zweiten Teilprozesssimulation VPU₄2 ist z. B. die Verringerung der Endtemperatur, ausgegeben als optimierte zweite Eduktspezifikation opt-ET₄2 (der Soll-Produktspezifikation s-PT₃ entsprechend), da eine geringere Kühlleistung zum Erreichen der Stofftrennung im vierten Teilprozess RPU₄ benötigt wird. Somit wird der Vorgängerteilprozess RPU₃ diese Soll-Produktspezifikation s-PT₃ in der nächsten Hinsimulation berücksichtigen und sich dahingehend optimieren.

Im letzten Produktionsschritt (fünfter Teilprozess) wird das Produkt abschließend eingestellt. D. h. hier sollen der Restgehalt von Wasser auf 5% gesenkt und eine Temperatur von -25°C für die Abfüllung eingestellt werden. Diese Angaben werden in der Soll-Produktspezifikation s-PT₅, was hier eine manuelle Produktspezifikation darstellt, bereitgestellt. Zum Erreichen der Soll-Produktspezifikation s-PT₅ wird das Kondensat aus dem vierten Teilprozess RPU₄ erneut abgekühlt. Die erste Teilprozesssimulation VPU₅1 berechnet die der Soll-Produktspezifikation PT₅ genügenden Soll-Stellgrößen s-PP₅.

Das Ergebnis der zweiten Teilprozesssimulation VPU₅2 ist z. B. die Verringerung der Endtemperatur, ausgegeben als optimierte zweite Eduktspezifikation opt-ET₅2 (der Soll-Produktspezifikation s-PT₄ entsprechend), da eine geringere Kühlleistung zum Erreichen der Stofftrennung im fünften Teilprozess RPU₅ benötigt wird. Somit wird der Vorgängerteilprozess RPU₃ diese Produktionsforderung in der nächsten Hinsimulation berücksichtigen und sich dahingehend optimieren.

Am Ende des gesamten Prozesses P wird das Produkt abgefüllt.

Zusammenfassend lässt sich feststellen, dass das erfindungsgemäße Verfahren und die erfindungsgemäße Vorrichtung es ermöglich, beispielsweise energetisch günstigere Prozesse neu zu entwickeln und bestehende Verfahren zu optimieren, so dass beispielsweise Umsatz, Ausbeute oder die Selektivität einer chemischen Reaktion bei gleichzeitiger Senkung des Energieeintrages gesteigert werden können. Dazu kann eine Hauptkomponentenanalyse (PCA) eingesetzt werden, um vor dem Optimierungsschritt aus den Messwerten signifikante und voneinander unabhängige Produktqualitäten zu bestimmen. Weiterhin können archivierte Daten zur Optimierung eingesetzt werden. Hierbei zeigen gerade diese Daten die reale Systemreaktion auf die veränderten Prozesssteuerungsparameter. In einer dynamischen Simulation können die archivierten Daten gewichtet berücksichtigt werden, so dass die Eigenheiten der Anlage im Modell mit berücksichtigt werden können. Zudem erfolgt eine "rückwärts gerichtete" Optimierung für die Bestimmung der Produktspezifikation PTi des vorhergehenden Teilprozesses. Die prozessanalytische Technologie stellt dabei die Werkzeuge für neue adaptive und dynamisch optimierte Prozesssteuerungsanwendungen bereit. Durch eine dynamische Betrachtung können auch kurzzeitige Störungen mit berücksichtigt werden, sodass es zu weniger Fehlproduktionen kommt.

### Bezugszeichenliste

- ABᵢ1, ABᵢ2: Abbruchbedingungen des Teilprozesses i
- ETᵢ: Eduktspezifikation des Teilprozesses i
- ETᵢ1: erste Eduktspezifikation des Teilprozesses i
- ETᵢ2: zweite Eduktspezifikation des Teilprozesses i
- opt-ETᵢ2: optimierte zweite Eduktspezifikation des Teilprozesses i
- Mᵢ: Simulationsmodell des Teilprozesses i
- MEᵢ: erweitertes Simulationsmodell des Teilprozesses i
- OPᵢ1, OPᵢ2: Optimierungsparameter des Teilprozesses i
- OR: Steuerempfehlung
- P: Prozess
- PPᵢ: Stellgrößen des Teilprozesses i
- s-PPᵢ: Soll-Stellgrößen des Teilprozesses i
- PTᵢ: Produktspezifikation des Teilprozesses i
- s-PTᵢ: Soll-Produktspezifikation des Teilprozesses i
- sim-PTᵢ: simulierte Produktspezifikation des Teilprozesses i
- RPUᵢ: Teilprozess i
- Si: Werte des Teilprozesses i
- VPUᵢ: Teilprozesssimulation des Teilprozesses i
- VPUᵢ1: erste Teilprozesssimulation des Teilprozesses i
- VPUᵢ2: zweite Teilprozesssimulation des Teilprozesses i

## Patentansprüche

1. Verfahren zur adaptiven und optimierenden Steuerung eines Prozesses (P) umfassend n Teilprozesse (RPUᵢ mit i = 1, 2 ... n), wobei ein oder mehrere Edukte in ein oder mehrere Produkte überführt werden, wobei zu jedem Teilprozess (RPUi) eine Teilprozesssimulation (VPUᵢ) erfolgt, aufweisend eine erste und eine zweite Teilprozessimulation (VPUᵢ1, VPUᵢ2),
wobei die erste Teilprozesssimulation (VPUᵢ1) umfasst
- Vorgeben einer Soll-Produktspezifikation (s-PTᵢ) des Teilprozesses (RPUᵢ) und eines Toleranzbereiches für die Soll-Produktspezifikation (s-PTᵢ)
- Ermitteln von Werten (Sᵢ) aus dem jeweiligen Teilprozess (RPUᵢ), welche den chemisch-physikalischen Zustand von Edukten des Teilprozesses (RPUᵢ) beschreiben,
- Erstellen einer ersten Eduktspezifikation (ETᵢ1) mittels der Werte (Sᵢ),
- Gewichtetes stochastisches Auswählen von Stellgrößen (PPᵢ) des Teilprozesses (RPUᵢ),
- Simulieren des Teilprozesses (RPUᵢ) mittels eines Simulationsmodells (Mᵢ), welches den Zusammenhang zwischen der Eduktspezifikation (ETᵢ), den Stellgrößen (PPᵢ) und der Produktspezifikation (PTᵢ) abbildet, mit der ersten Eduktspezifikation (ETᵢ1) und den gewichtet stochastisch ausgewählten Stellgrößen (PPᵢ) zum Erhalt einer simulierten Produktspezifikation (sim-PTᵢ),
- Prüfen, ob die simulierte Produktspezifikation (sim-PTᵢ) im Toleranzbereich der Soll-Produktspezifikation (s-PTᵢ) liegt,
- falls die simulierte Produktspezifikation (PTᵢ) nicht im Toleranzbereichs der Soll-Produktspezifikation (s-PTᵢ) liegt, erneutes gewichtetes stochastisches Auswählen von Stellgrößen (PPᵢ) und Simulieren des Teilprozesses (RPUᵢ),
- Ausgeben derjenigen Stellgrößen (PPᵢ) als Soll-Stellgrößen (s-PPᵢ) für die Durchführung des Teilprozesses (RPUᵢ), für die die simulierte Produktspezifikation (sim-PTᵢ) innerhalb des Toleranzbereichs der Soll-Produktspezifikation (s-PTᵢ) liegt
und wobei die zweite Teilprozesssimulation (VPUᵢ2) umfasst
- Vorgeben der Soll-Produktspezifikation (s-PTᵢ) und der Soll-Stellgrößen (s-PPi),
- Definieren eines ersten Optimierungsparameters (OPᵢ1) des Teilprozesses i und einer ersten Abbruchbedingung des Teilprozesses i (ABᵢ1),
- Vorgeben einer zweiten Eduktspezifikation (ETᵢ2),
- Simulieren des Teilprozesses (RPUᵢ) mittels eines erweiterten Simulationsmodells (MEᵢ), welches den Zusammenhang zwischen der Eduktspezifikation (ETᵢ), den Stellgrößen (PPᵢ), der Produktspezifikation (PTᵢ) und dem ersten Optimierungsparameter (OPᵢ1) abbildet, mit den Soll-Stellgrößen (s-PPᵢ), der Soll-Produktspezifikation (s-PTᵢ) und der zweiten Eduktspezifikation (ETᵢ2) zum Erhalt des ersten Optimierungsparameters (OPᵢ1),
- Prüfen des Erfüllens der ersten Abbruchbedingung (ABᵢ1) für den erhaltenen ersten Optimierungsparameter (OPᵢ1),
- falls die erste Abbruchbedingung (ABᵢ1) nicht erfüllt wird, erneutes Vorgeben einer zweiten Eduktspezifikation (ETᵢ2) und Simulieren des Teilprozesses (RPUᵢ) bis die erste Abbruchbedingung (ABᵢ1) vorliegt,
- Ausgeben derjenigen zweiten Eduktspezifikation (ETᵢ2), bei der die erste Abbruchbedingung (ABᵢ1) erfüllt wird als optimierte zweite Eduktspezifikation (opt-ETᵢ2).

2. Verfahren nach Anspruch 1, wobei der Prozess (P) i Teilprozesse (RPUᵢ) mit i = 1...n und n > 1 umfasst.

3. Verfahren nach Anspruch 2, wobei für alle Teilprozesse (RPUᵢ) mit i < n die Soll-Produktspezifikation (s-PTᵢ) für die erste und/oder zweite Teilprozesssimulation vorgegeben wird, indem für jeden i-ten Teilprozess mit i > 1 die optimierte zweite Eduktspezifikation (opt-ETᵢ2) gemäß der zweiten Teilprozesssimulation nach Anspruch 1 ermittelt und als Soll-Produktspezifikation (s-PTᵢ₋₁) an den (i-1)-ten Teilprozess (RPUᵢ₋₁) übermittelt wird.

4. Verfahren nach einem der vorstehenden Ansprüche, wobei die zweite Eduktspezifikation (ETᵢ2) Parameter umfasst, die gewichtet stochastisch ausgewählt werden.

5. Verfahren nach einem der vorstehenden Ansprüche, wobei
- die erste Teilprozesssimulation (VPUᵢ1) weiterhin das Definieren eines zweiten Optimierungsparameters des Teilprozesses i (OPᵢ2) und einer zweiten Abbruchbedingung des Teilprozesses i (ABᵢ2) umfasst,
- in der ersten Teilprozesssimulation (VPUᵢ1) der Teilprozess (RPUᵢ) mittels eines Simulationmodells (Mᵢ) simuliert wird, welches den Zusammenhang zwischen der Eduktspezifikation (ETᵢ), den Stellgrößen (PPᵢ), der Produktspezifikation (PTᵢ) und dem zweiten Optimierungsparameter (OPᵢ2) abbildet,
- die erste Teilprozesssimulation (VPUᵢ1) weiterhin das Prüfen des Erfüllens der zweiten Abbruchbedingung (ABᵢ2) für den erhaltenen zweiten Optimierungsparameter (OPᵢ2) und falls die zweite Abbruchbedingung (ABᵢ2) nicht vorliegt, erneutes gewichtetes stochastisches Auswählen von Stellgrößen (PPᵢ) und Simulieren des Teilprozesses (RPUi) bis die erste Abbruchbedingung (ABᵢ1) vorliegt, umfasst, und
- diejenigen Stellgrößen (PPᵢ) als Soll-Stellgrößen (s-PPᵢ) für die Durchführung des Teilprozesses (RPUᵢ) ausgegeben werden, bei denen weiterhin die zweite Abbruchbedingung (ABᵢ2) erfüllt wird.

6. Verfahren nach einem der vorstehenden Ansprüche, wobei die Soll-Stellgrößen (s-PPᵢ) als Steuerempfehlung (OR) oder an eine Steuereinrichtung zur direkten Steuerung des Teilprozesses (RPUᵢ) ausgegeben werden.

7. Verfahren nach einem der vorstehenden Ansprüche, wobei ein oder mehrere Simulationsmodelle (Mᵢ) durch jeweils ein nichtlineares Gleichungssystem dargestellt sind.

8. Verfahren nach einem der vorstehenden Ansprüche, wobei ein oder mehrere Gleichungssysteme eines oder mehrerer Simulationsmodelle (Mᵢ) numerische mittels einer auf finite Elemente angewandten orthogonalen Kollokation gelöst werden.

9. Verfahren nach einem der vorstehenden Ansprüche, wobei zumindest eine erste Teilprozesssimulation (VPUᵢ1) und/oder zumindest eine zweite Teilprozesssimulation (VPUᵢ2) cloudbasiert erfolgen.

10. Verwendung eines Verfahrens nach einem der vorstehenden Ansprüche zur Steuerung eines chemischen Prozesses (P).

11. Vorrichtung zur Durchführung eines Verfahrens nach einem der Ansprüche 1 bis 9, aufweisend
- Sensoren zur Ermittlung von Werten (Sᵢ), welche den Teilprozess (RPUᵢ) beschreiben,
- eine Verarbeitungseinheit, die ausgelegt ist zum Durchführen der ersten und zweiten Teilprozessimulation (VPUᵢ1, VPUᵢ2),
- Ausgabemittel zur Ausgabe der Soll-Stellgrößen (s-PPᵢ) für die Durchführung des Teilprozesses (RPUᵢ) und zur Ausgabe der optimierten zweiten Eduktspezifikation (opt-ETᵢ2).

## Claims

1. Method for adaptive and optimising control of a process (P) comprising n subprocesses (RPUᵢ, where i = 1, 2 ... n), wherein one or more educts are transferred into one or more products, wherein, for each subprocess simulation (RPUᵢ), a subprocess simulation (VPUi) is performed, having a first and a second subprocess simulation (VPUᵢ1, VPUᵢ2),
wherein the first subprocess simulation (VPUᵢ1) comprises:
- predefinition of a reference product specification (s-PTi) of the subprocess (RPUᵢ) and a tolerance range for the reference product specification (s-PTᵢ),
- determination of values (Si) from the respective subprocess (RPUᵢ) which describe the chemical/physical state of educts of the subprocess (RPUᵢ),
- creation of a first educt specification (ETᵢ1) by means of the values (Sᵢ),
- weighted stochastic selection of correcting variables (PPᵢ) of the subprocess (RPUᵢ),
- simulation of the subprocess (RPUᵢ) by means of a simulation model (Mᵢ) which maps the relationship between the educt specification (ETᵢ), the correcting variables (PPᵢ) and the product specification (PTᵢ) with the first educt specification (ETᵢ1) and the correcting variables (PPᵢ) obtained through the weighted stochastic selection in order to obtain a simulated product specification (sim-PTᵢ),
- checking whether the simulated product specification (sim-PTᵢ) lies within the tolerance range of the reference product specification (s-PTᵢ),
- if the simulated product specification (PTᵢ) does not lie within the tolerance range of the reference product specification (s-PTi), further weighted stochastic selection of correcting variables (PPᵢ) and simulation of the subprocess (RPUᵢ) ,
- output of those correcting variables (PPᵢ) for which the simulated product specification (sim-PTᵢ) lies within the tolerance range of the reference product specification (s-PTi) as reference correcting variables (s-PPᵢ) for the performance of the subprocess (RPUᵢ) ,
and wherein the second subprocess simulation (VPUᵢ2) comprises:
- predefinition of the reference product specification (s-PTᵢ) and the reference correcting variables (s-PPᵢ),
- definition of a first optimisation parameter (OPᵢ1) of the subprocess i and a first interrupt condition of the subprocess i (ABᵢ1),
- predefinition of a second educt specification (ETᵢ2),
- simulation of the subprocess (RPUᵢ) by means of an extended simulation model (MEi) which maps the relationship between the educt specification (ETᵢ), the correcting variables (PPᵢ), the product specification (PTᵢ) and the first optimisation parameter (OPᵢ1) with the reference correcting variables (s-PPᵢ), the reference product specification (s-PTi) and the second educt specification (ETᵢ2)in order to obtain the first optimisation parameter (OPᵢ1),
- checking the fulfilment of the first interrupt condition (ABᵢ1) for the obtained first optimisation parameter (OPᵢ1),
- if the first interrupt condition (ABᵢ1) is not fulfilled, further predefinition of a second educt specification (ETᵢ2)and simulation of the subprocess (RPUi) until the first interrupt condition (ABᵢ1) is met,
- output of the second educt specification (ETᵢ2) in which the first interrupt condition (ABᵢ1) is fulfilled as the optimised second educt specification (opt-ETᵢ2).

2. Method according to Claim 1, wherein the process (P) comprises i subprocesses (RPUᵢ) , where i = 1 ... n and n > 1.

3. Method according to Claim 2, wherein, for all subprocesses (RPUᵢ) where i < n, the reference product specification (s-PTᵢ) is predefined for the first and/or second subprocess simulation in that, for each i-th subprocess where i > 1, the optimised second educt specification (opt-ETᵢ2) is determined in accordance with the second subprocess simulation according to Claim 1 and is transferred as the reference product specification (s-PT_{i -1}) to the (i-1) th subprocess (RPUᵢ₋₁).

4. Method according to one of the preceding claims, wherein the second educt specification (ETᵢ2) comprises parameters which are obtained through weighted stochastic selection.

5. Method according to one of the preceding claims, wherein:
- the first subprocess simulation (VPUᵢ1) further comprises the definition of a second optimisation parameter of the subprocess i (OPi2) and a second interrupt condition of the subprocess i (ABᵢ2),
- in the first subprocess simulation (VPUᵢ1), the subprocess (RPUᵢ) is simulated by means of a simulation model (Mᵢ) which maps the relationship between the educt specification (ETᵢ), the correcting variables (PPᵢ), the product specification (PTᵢ) and the second optimisation parameter (OPᵢ2),
- the first subprocess simulation (VPUᵢ1) further comprises checking the fulfilment of the second interrupt condition (ABᵢ2) for the obtained second optimisation parameter (OPᵢ2) and, if the second interrupt condition (ABᵢ2) is not met, further weighted stochastic selection of correcting variables (PPᵢ) and simulation of the subprocess (RPUᵢ) until the first interrupt condition (ABᵢ1) is met, and
- those correcting variables (PPi) in which the second interrupt condition (ABᵢ2) is further fulfilled are output as reference correcting variables (s-PPi) for the performance of the subprocess (RPUᵢ1).

6. Method according to one of the preceding claims, wherein the reference correcting variables (s-PPi) are output as a control recommendation (OR) or are output to a control device for direct control of the subprocess (RPUᵢ) .

7. Method according to one of the preceding claims, wherein one or more simulation models (Mᵢ) are represented in each case by a non-linear equation system.

8. Method according to one of the preceding claims, wherein one or more equation systems of one or more simulation models (Mᵢ) are solved numerically by means of an orthogonal collocation applied to finite elements.

9. Method according to one of the preceding claims, wherein at least one first subprocess simulation (VPUᵢ1) and/or at least one second subprocess simulation (VPUᵢ2) are performed in a cloud-based manner.

10. Use of a method according to one of the preceding claims to control a chemical process (P).

11. Device to carry out a method according to one of claims 1 to 9, having:
- sensors to determine values (Si) which describe the subprocess (RPUᵢ),
- a processing unit which is designed to carry out the first and second subprocess simulation (VPUᵢ1, VPUᵢ2),
- output means to output the reference correcting variables (s-PPᵢ) for the performance of the subprocess (RPUᵢ) and to output the optimised second educt specification (opt-ETᵢ2).

## Revendications

1. Procédé de contrôle adaptatif et optimisant d'un processus (P), comprenant n processus partiels (RPUᵢ avec i = 1, 2 ... n), selon lequel un ou plusieurs réactifs sont transformés en un ou plusieurs produits, une simulation de processus partiel (VPUᵢ) ayant lieu pour chaque processus partiel (RPUᵢ), comprenant une première et une deuxième simulation de processus partiel (VPUᵢ1, VPUᵢ2),
la première simulation de processus partiel (VPUᵢ1) comprenant :
- la prescription d'une spécification de produit de consigne (s-PTi) du processus partiel (RPUᵢ) et d'une plage de tolérance pour la spécification de produit de consigne (s-PTᵢ),
- la détermination de valeurs (Si) à partir du processus partiel respectif (RPUᵢ), qui décrivent l'état chimico-physique des réactifs du processus partiel (RPUᵢ) ,
- l'élaboration d'une première spécification de réactif (ETᵢ1) au moyen des valeurs (Sᵢ),
- le choix stochastique pondéré de grandeurs de réglage (PPᵢ) du processus partiel (RPUᵢ) ,
- la simulation du processus partiel (RPUᵢ) au moyen d'un modèle de simulation (Mᵢ), qui reproduit la relation entre la spécification de réactif (ETᵢ), les grandeurs de réglage (PPᵢ) et la spécification de produit (PTᵢ), avec la première spécification de réactif (ETᵢ1) et les grandeurs de réglage choisies de manière stochastique pondérée (PPᵢ) pour obtenir une spécification de produit simulée (sim-PTᵢ),
- la vérification de si la spécification de produit simulée (sim-PTᵢ) se situe dans la plage de tolérance de la spécification de produit de consigne (s-PTᵢ),
- si la spécification de produit simulée (PTᵢ) ne se situe pas dans la plage de tolérance de la spécification de produit de consigne (s-PTᵢ), le nouveau choix stochastique pondéré de grandeurs de réglage (PPᵢ) et la simulation du processus partiel (RPUᵢ),
- l'émission des grandeurs de réglage (PPᵢ) pour lesquelles la spécification de produit simulée (sim-PTᵢ) se situe dans la plage de tolérance de la spécification de produit de consigne (s-PTi) en tant que grandeurs de réglage de consigne (s-PPᵢ) pour la réalisation du processus partiel (RPUᵢ),
et la deuxième simulation de processus partiel (VPUᵢ2) comprenant :
- la prescription de la spécification de produit de consigne (s-PTᵢ) et des grandeurs de réglage de consigne (s-PPᵢ),
- la définition d'un premier paramètre d'optimisation (OPᵢ1) du processus partiel i et d'une première condition d'interruption du processus partiel i (ABᵢ1),
- la prescription d'une deuxième spécification de réactif (ETᵢ2),
- la simulation du processus partiel (RPUᵢ) au moyen d'un modèle de simulation élargi (MEᵢ), qui reproduit la relation entre la spécification de réactif (ETᵢ), les grandeurs de réglage (PPᵢ), la spécification de produit (PTᵢ) et le premier paramètre d'optimisation (OPᵢ1), avec les grandeurs de réglage de consigne (s-PPᵢ), la spécification de produit de consigne (s-PTᵢ) et la deuxième spécification de réactif (ETᵢ2)pour obtenir le premier paramètre d'optimisation (OPᵢ1),
- la vérification de la satisfaction de la première condition d'interruption (ABᵢ1) pour le premier paramètre d'optimisation obtenu (OPᵢ1),
- si la première condition d'interruption (ABᵢ1) n'est pas satisfaite, la nouvelle prescription d'une deuxième spécification de réactif (ETᵢ2) et la simulation du processus partiel (RPUᵢ) jusqu'à ce que la première condition d'interruption (ABᵢ1) soit présente,
- l'émission de la deuxième spécification de réactif (ETᵢ2)pour laquelle la première condition d'interruption (ABᵢ1) est satisfaite en tant que deuxième spécification de réactif optimisée (opt-ETᵢ2).

2. Procédé selon la revendication 1, dans lequel le processus (P) comprend i processus partiels (RPUᵢ) avec i = 1...n et n > 1.

3. Procédé selon la revendication 2, dans lequel, pour tous les processus partiels (RPUᵢ) avec i < n, la spécification de produit de consigne (s-PTi) est prescrite pour la première et/ou la deuxième simulation de processus partiel par détermination de la deuxième spécification de réactif optimisée (opt-ETi2) selon la deuxième simulation de processus partiel selon la revendication 1 pour chaque i^{ème} processus partiel avec i > 1, et transfert au (i-1)^{ème} processus partiel (RPUᵢ-i) en tant que spécification de produit de consigne (s-PTᵢ₋₁).

4. Procédé selon l'une quelconque des revendications précédentes, dans lequel la deuxième spécification de réactif (ETᵢ2)comprend des paramètres qui sont choisis de manière stochastique pondérée.

5. Procédé selon l'une quelconque des revendications précédentes, dans lequel
- la première simulation de processus partiel (VPUᵢ1) comprend en outre la définition d'un deuxième paramètre d'optimisation du processus partiel i (OPi2) et une deuxième condition d'interruption du processus partiel i (ABᵢ2),
- dans la première simulation de processus partiel (VPUᵢ1), le processus partiel (RPUᵢ) est simulé au moyen d'un modèle de simulation (Mᵢ) qui reproduit la relation entre la spécification de réactif (ETᵢ), les grandeurs de réglage (PPᵢ), la spécification de produit (PTᵢ) et le deuxième paramètre d'optimisation (OPᵢ2),
- la première simulation de processus partiel (VPUᵢ1) comprend en outre la vérification de la satisfaction de la deuxième condition d'interruption (ABᵢ2) pour le deuxième paramètre d'optimisation obtenu (OPi2) et, si la deuxième condition d'interruption (ABᵢ2) n'est pas présente, le nouveau choix stochastique pondéré de grandeurs de réglage (PPᵢ) et la simulation du processus partiel (RPUᵢ) jusqu'à ce que la première condition d'interruption (ABᵢ1) soit présente, et
- les grandeurs de réglage (PPᵢ) pour lesquelles la deuxième condition d'interruption (ABᵢ2) est également satisfaite sont émises en tant que grandeurs de réglage de consigne (s-PPᵢ) pour la réalisation du processus partiel (RPUᵢ) .

6. Procédé selon l'une quelconque des revendications précédentes, dans lequel les grandeurs de réglage de consigne (s-PPᵢ) sont émises en tant que recommandation de contrôle (OR) ou émises à un dispositif de contrôle pour le contrôle direct du processus partiel (RPUᵢ).

7. Procédé selon l'une quelconque des revendications précédentes, dans lequel un ou plusieurs modèles de simulation (Mᵢ) sont chacun représentés par un système d'équations non linéaire.

8. Procédé selon l'une quelconque des revendications précédentes, dans lequel un ou plusieurs systèmes d'équations d'un ou de plusieurs modèles de simulation (Mᵢ) sont résous numériquement au moyen d'une collocation orthogonale appliquée à des éléments finis.

9. Procédé selon l'une quelconque des revendications précédentes, dans lequel au moins une première simulation de processus partiel (VPUᵢ1) et/ou au moins une deuxième simulation de processus partiel (VPUᵢ2) ont lieu en ligne.

10. Utilisation d'un procédé selon l'une quelconque des revendications précédentes pour le contrôle d'un processus chimique (P).

11. Dispositif pour la réalisation d'un procédé selon l'une quelconque des revendications 1 à 9, comprenant :
- des capteurs pour la détermination de valeurs (Sᵢ), qui décrivent le processus partiel (RPUᵢ),
- une unité de traitement qui est conçue pour la réalisation de la première et de la deuxième simulation de processus partiel (VPUᵢ1, VPUᵢ2),
- des moyens d'émission pour l'émission des grandeurs de réglage de consigne (s-PPᵢ) pour la réalisation du processus partiel (RPUᵢ) et l'émission de la deuxième spécification de réactif optimisée (opt-ETᵢ2).
